(19) Europäisches Patentamt
European Patent Office
Office européen des brevets

(11) **EP 3 576 916 B1**

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(21) Anmeldenummer: **18701349.5**

(22) Anmeldetag: **25.01.2018**

(51) Int Cl.:
*B29B 9/12* (2006.01)    *B29C 67/00* (2017.01)
*B33Y 70/00* (2020.01)    *B29K 77/00* (2006.01)
*B29C 64/153* (2017.01)

(86) Internationale Anmeldenummer:
**PCT/EP2018/051860**

(87) Internationale Veröffentlichungsnummer:
**WO 2018/141631 (09.08.2018 Gazette 2018/32)**

(54) **VERFAHREN ZUR HERSTELLUNG EINES POLYAMIDPULVERS DURCH FÄLLUNG**

METHOD FOR THE PRODUCTION OF POLYAMIDE POWDER BY PRECIPITATION

PROCEDE DE FABRICATION DE POUDRE DE POLYAMIDE PAR PRECIPITATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2017 EP 17154213**

(43) Veröffentlichungstag der Anmeldung:
**11.12.2019 Patentblatt 2019/50**

(73) Patentinhaber: **BASF SE**
**67056 Ludwigshafen (DE)**

(72) Erfinder:
• **GRAMLICH, Simon**
**67056 Ludwigshafen (DE)**
• **MEIER, Thomas**
**67056 Ludwigshafen (DE)**
• **GABRIEL, Claus**
**67056 Ludwigshafen (DE)**
• **HERLE, Natalie Beatrice Janine**
**67056 Ludwigshafen (DE)**

(74) Vertreter: **BASF IP Association**
**BASF SE**
**GBI-C006**
**67056 Ludwigshafen (DE)**

(56) Entgegenhaltungen:
EP-A1- 1 411 087    EP-A1- 1 505 111
EP-A1- 2 404 955    WO-A1-2005/085326

**Beschreibung**

Die vorliegende Erfindung betrifft ein Verfahren zur Herstellung eines Polyamidpulvers (PP), das mindestens ein teilkristallines Polyamid (P) und mindestens ein Additiv (A) enthält. Dabei werden zunächst das teilkristalline Polyamid (P) und das mindestens eine Additiv (A) miteinander in einem Extruder compoundiert und anschließend in ein Lösungsmittel (LM) eingebracht, in dem dann das mindestens eine teilkristalline Polyamid (P) kristallisiert unter Erhalt des Polyamidpulvers (PP). Darüber hinaus betrifft die vorliegende Erfindung das so erhältliche Polyamidpulver (PP) und die Verwendung des Polyamidpulvers (PP) als Sinterpulver (SP) sowie ein Verfahren zur Herstellung eines Formkörpers durch selektives Lasersintern eines Polyamidpulvers (PP).

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

EP1505111 A1 offenbart ein Verfahren zur Herstellung eines Polyamidpulvers zum Selektiven Lasersintern, umfassend die Schritte: (i) Compoundieren eines teilkristallinen Polyamids (PA12) und eines Stabilisators (IRGANOX) durch Extrusion der Mischung; (ii) Umfällen der extrudierten Mischung durch das folgende Verfahren: Suspendieren der Mischung in einem Lösungsmittel enthaltend Ethanol und 1% Wasser; Erwärmen der Suspension auf eine erste Temperatur, wobei das Polyamid gelöst wird; Abkühlen der Lösung auf eine zweite Temperatur, wobei das Polyamid kristallisiert; und (iii) Abtrennen des Pulvers durch Abdestillieren des Lösemittels.

Insbesondere Polyamidpulver eignen sich als Sinterpulver im selektiven Lasersintern (SLS). Im Stand der Technik sind verschiedene Polyamidpulver beschrieben, die als Sinterpulver eingesetzt werden können. Die im Stand der Technik beschriebenen Polyamidpulver sind üblicherweise nicht gefärbt oder werden durch nachträgliches Einfärben gefärbt.

Nachteilig bei nicht gefärbten Sinterpulvern ist insbesondere, dass diese zu Verfärbungen und/oder Vergilbungen neigen, insbesondere während des selektiven Lasersinterprozesses. Nachträglich eingefärbte Sinterpulver sind nicht durchgefärbt, was insbesondere bei einer nachträglichen Bearbeitung von aus diesen Sinterpulvern hergestellten Bauteilen zu einer ungleichmäßigen Farbwirkung führt.

Darüber hinaus weisen die im Stand der Technik beschriebenen Sinterpulver zum selektiven Lasersintern häufig nur eine geringe Alterungsbeständigkeit sowie ein schlechtes Recyclingverhalten auf. Insbesondere ihre thermooxidative Stabilität ist gering, sodass sie bei wiederholter Verwendung vergilben und es außerdem zu einem Polymerkettenabbau und/oder -aufbau kommt, der sich in einer Änderung der Viskosität des Sinterpulvers und der mechanischen Eigenschaften der daraus hergestellten Bauteile zeigt.

Darüber hinaus ist das Sinterfenster des Sinterpulvers beim selektiven Lasersintern von besonderer Bedeutung. Dieses sollte möglichst breit sein, um einen Verzug von Bauteilen beim Lasersintern zu reduzieren. Insbesondere die im Stand der Technik beschriebenen nachträglich eingefärbten Sinterpulver weisen häufig ein verkleinertes Sinterfenster gegenüber dem Sinterfenster des reinen Sinterpulvers auf.

Die der vorliegenden Erfindung zugrunde liegende Aufgabe besteht somit darin, ein Verfahren zur Herstellung eines Polyamidpulvers (PP) bereitzustellen, wobei das Polyamidpulver (PP) insbesondere geeignet sein sollte für den Einsatz als Sinterpulver (SP) in einem selektiven Lasersinterverfahren. Das Verfahren und das daraus erhältliche Polyamidpulver (PP) sollten die vorgenannten Nachteile der im Stand der Technik beschriebenen Verfahren und Sinterpulver nicht oder nur in vermindertem Maße aufweisen. Das Verfahren sollte zudem möglichst einfach und kostengünstig durchführbar sein.

Gelöst wird diese Aufgabe durch ein Verfahren zur Herstellung eines Polyamidpulvers (PP), das mindestens ein teilkristallines Polyamid (P) und mindestens ein Additiv (A), ausgewählt aus der Gruppe bestehend aus anorganischen Pigmenten und Stabilisatoren, enthält, umfassend die Schritte

a) Compoundieren des mindestens einen teilkristallinen Polyamids (P) und des mindestens einen Additivs (A) in einem Extruder unter Erhalt einer compoundierten Mischung (cM), die das mindestens eine teilkristalline Polyamid (P) und das mindestens eine Additiv (A) enthält,
b) Extrusion der in Schritt a) erhaltenen compoundierten Mischung (cM) aus dem Extruder unter Erhalt einer extrudierten Mischung (eM), die das mindestens eine teilkristalline Polyamid (P) und das mindestens eine Additiv (A) enthält,
c) Einbringen der in Schritt b) erhaltenen extrudierten Mischung (eM) in ein Lösungsmittel (LM) unter Erhalt einer ersten Suspension (S1), die die extrudierte Mischung (eM) und das Lösungsmittel (LM) enthält, wobei das Lösungsmittel (LM) Lactam und Wasser enthält,

d) Erwärmen der in Schritt c) erhaltenen ersten Suspension (S1) auf eine erste Temperatur (T1) wobei sich das in der extrudierten Mischung (eM) enthaltene mindestens eine teilkristalline Polyamid (P) in dem Lösungsmittel (LM) löst unter Erhalt eines Gemischs (G), das das mindestens eine teilkristalline Polyamid (P) gelöst in dem Lösungsmittel (LM) und das mindestens eine Additiv (A) enthält,

e) Abkühlen des in Schritt d) erhaltenen Gemischs (G) auf eine zweite Temperatur (T2), wobei das mindestens eine teilkristalline Polyamid (P) kristallisiert unter Erhalt einer zweiten Suspension (S2), die das Polyamidpulver (PP) suspendiert in dem Lösungsmittel (LM) enthält,

f) Abtrennen des Polyamidpulvers (PP) aus der in Schritt e) erhaltenen zweiten Suspension (S2).

Es wurde überraschend gefunden, dass das durch das erfindungsgemäße Verfahren hergestellte Polyamidpulver (PP) eine besonders enge Partikelgrößenverteilung aufweist und sich zudem besonders gut für die Verwendung in einem selektiven Lasersinterverfahren eignet. Darüber hinaus ist das erfindungsgemäß hergestellte Polyamidpulver (PP) besonders lagerstabil und hat auch nach thermischer Alterung in der Lasersinteranlage noch eine hohe Recyclierbarkeit, sodass bei der Herstellung eines Formkörpers nicht aufgeschmolzenes Polyamidpulver (PP) wiederverwendet werden kann. Zudem weist das erfindungsgemäße Polyamidpulver (PP) auch nach mehreren Lasersinterzyklen ähnlich vorteilhafte Sintereigenschaften auf wie beim ersten Zyklus.

Darüber hinaus weist das erfindungsgemäße Polyamidpulver (PP) selbst nach mehreren Sinterzyklen keine oder nur eine sehr geringe Verfärbung auf und es besitzt ein ausreichend verbreitertes Sinterfenster ($W_{SP}$), sodass ein Formkörper, der daraus durch selektives Lasersintern hergestellt ist, keinen oder einen deutlich reduzierten Verzug zeigt.

Nachfolgend wird die vorliegende Erfindung näher erläutert.

Teilkristallines Polyamid (P)

Das im erfindungsgemäßen Verfahren hergestellte Polyamidpulver (PP) enthält mindestens ein teilkristallines Polyamid (P).

"Mindestens ein teilkristallines Polyamid (P)" bedeutet im Rahmen der vorliegenden Erfindung sowohl genau ein teilkristallines Polyamid (P) als auch eine Mischung (Blend) aus zwei oder mehreren teilkristallinen Polyamiden (P).

"Teilkristallin" bedeutet im Rahmen der vorliegenden Erfindung, dass das Polyamid eine Schmelzenthalpie $\Delta H2_{(A)}$ von > 45 J/g, bevorzugt von > 50 J/g und insbesondere bevorzugt von > 55 J/g aufweist, jeweils gemessen mittels dynamischer Differenzkalorimetrie (Differential Scanning Calorimetry, DSC) gemäß ISO 11357-4: 2014 bei einer Heizrate von 20 K/min.

Das mindestens eine teilkristalline Polyamid (P) weist außerdem bevorzugt eine Schmelzenthalpie $\Delta H2_{(A)}$ von < 200 J/g, besonders bevorzugt von < 175 J/g und insbesondere bevorzugt von < 150 J/g auf, jeweils gemessen mittels dynamischer Differenzkalorimetrie (Differential Scanning Calorimetry, DSC) gemäß ISO 11357-4: 2014 bei einer Kühlrate von 20 K/min.

Als mindestens ein teilkristallines Polyamid (P) sind beispielsweise Polyamide geeignet, die sich von Lactamen mit 7 bis 13 Ringgliedern ableiten. Als mindestens ein teilkristallines Polyamid (P) sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Caprolactam, Capryllactam und/oder Laurinlactam ableiten.

Weiterhin geeignete Polyamide sind erhältlich aus $\omega$-Aminoalkylnitrilen. Bevorzugtes $\omega$-Aminoalkylnitril ist Aminocapronitril, das zu Polyamid 6 führt. Weiterhin können Dinitrile mit Diaminen umgesetzt werden. Hierbei sind Adipodinitril und Hexamethylendiamin bevorzugt, deren Polymerisation zu Polyamid 66 führt. Die Polymerisation von Nitrilen erfolgt bevorzugt in Gegenwart von Wasser und wird auch als Direktpolymerisation bezeichnet.

Für den Fall, dass als das mindestens eine teilkristalline Polyamid (P) Polyamide eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt mit 6 bis 12 Kohlenstoffatomen und besonders bevorzugt mit 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophthalsäure als Dicarbonsäuren genannt.

Als Diamine eignen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)methan, 2,2-Di-(4-aminophenyl)-propan und 2,2-Di-(4-aminocyclohexyl)-propan sowie 1,5-Diamino-2-methyl-pentan.

Bevorzugt als das mindestens eine teilkristalline Polyamid (P) sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactameinheiten.

Weiterhin sind Polyamide geeignet, die durch Copolymerisation zweier oder mehrerer der vorstehend und nachstehend genannten Monomere erhältlich sind, oder Mischungen mehrerer Polyamide, wobei das Mischungsverhältnis beliebig ist.

Geeignete Polyamide sind somit aliphatische, teilaromatische oder aromatische Polyamide. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen als auch aus aromatischen Monomeren aufgebaut sind. Der Begriff "aromatische Polyamide" bedeutet, dass die Polyamide ausschließlich aus aromatischen Monomeren aufgebaut sind.

Die nachfolgende, nicht abschließende Aufstellung enthält bevorzugte teilkristalline Polyamide für den Einsatz als das mindestens eine teilkristalline Polyamid (P) im erfindungsgemäßen Verfahren.

AB-Polymere:

| PA 4 | Pyrrolidon |
|------|-----------|
| PA 6 | $\varepsilon$-Caprolactam |
| PA 7 | Enantholactam |
| PA 8 | Capryllactam |

AA/BB-Polymere:

| PA 46 | Tetramethylendiamin, Adipinsäure |
|-------|-----------------------------------|
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 6T | Hexamethylendiamin, Terephthalsäure |
| PA MXD6 | m-Xylyendiamin, Adipinsäure |

| PA 6/6I | (siehe PA 6), Hexamethylendiamin, Isophthalsäure |
|---------|---------------------------------------------------|
| PA 6/6T | (siehe PA 6 und PA 6T) |
| PA 6/66 | (siehe PA 6 und PA 66) |
| PA 6/12 | (siehe PA 6), Lauryllactam |
| PA 66/6/610 | (siehe PA 66, PA 6 und PA 610) |
| PA 6I/6T/PACM | wie PA 6I/6T und Diaminodicyclohexylmethan |
| PA 6/6I6T | (siehe PA 6 und PA 6T), Hexamethylendiamin, Isophthalsäure |

Bevorzugt ist das mindestens eine teilkristalline Polyamid (P) ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM12, PA 6I/6T/PACM und Copolyamiden aus zwei oder mehreren der vorstehend genannten Polyamide.

Besonders bevorzugt ist das mindestens eine teilkristalline Polyamid (P) ausgewählt aus der Gruppe bestehend aus PA 6, PA 66, PA 610, PA 612, PA 6.36, PA 6/66, PA 6/6I6T, PA 6/6T und PA 6/6I.

Insbesondere bevorzugt ist das mindestens eine teilkristalline Polyamid (P) ausgewählt aus der Gruppe bestehend aus PA 6, PA 66, PA 610, PA 6/66 und PA 6/6T.

Gegenstand der vorliegenden Erfindung ist daher auch ein Verfahren, bei dem das mindestens eine teilkristalline Polyamid (P) ausgewählt ist aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM 12, PA 6I/6T/PACM und Copolyamiden aus zwei oder mehreren der vorstehend genannten Polyamide.

Beispielsweise weist das mindestens eine teilkristalline Polyamid (P) eine Viskositätszahl ($VZ_{(P)}$) im Bereich von 70 bis 350 ml/g, vorzugsweise von 70 bis 240 ml/g auf. Die Bestimmung der Viskositätszahl ($VZ_{(P)}$) des mindestens einen teilkristallinen Polyamids (P) erfolgt erfindungsgemäß in einer 0,5 Gew.-%-igen Lösung des mindestens einen teilkristallinen Polyamids (P) und in 96 Gew.-%-iger Schwefelsäure bei 25° C gemäß ISO 307:2013-08.

Das mindestens eine teilkristalline Polyamid (P) weist vorzugsweise ein gewichtsmittleres Molekulargewicht ($M_W$) im Bereich von 500 bis 2.000.000 g/Mol, besonders bevorzugt im Bereich von 5.000 bis 500.000 g/Mol und insbesondere bevorzugt im Bereich von 10.000 bis 100.000 g/Mol auf. Das gewichtsmittlere Molekulargewicht ($M_W$) wird bestimmt gemäß ASTM-D 4001.

Das mindestens eine teilkristalline Polyamid (P) weist üblicherweise eine Schmelztemperatur ($T_{M(P)}$) auf. Die Schmelztemperatur ($T_{M(P)}$) des mindestens einen teilkristallinen Polyamids (P) liegt beispielsweise im Bereich von 70 bis 300° C, bevorzugt im Bereich von 180 bis 295° C.

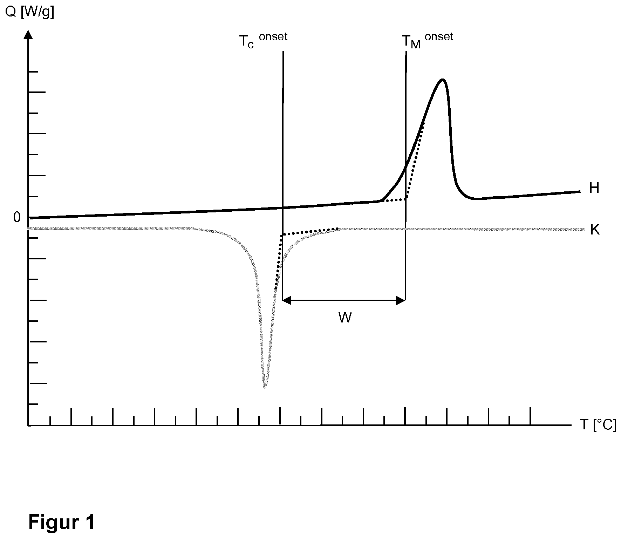

Die Schmelztemperatur ($T_{M(P)}$) des mindestens einen teilkristallinen Polyamids (P) wird mittels dynamischer Differenzkalorimetrie bestimmt. Zur Bestimmung der Schmelztemperatur ($T_{M(P)}$) mittels dynamischer Differenzkalorimetrie (DDK; Differential Scanning Calorimetry, DSC) werden üblicherweise ein Heizlauf (H) und ein Kühllauf (K) gemessen. Dabei wird ein DSC-Diagramm, wie es in Figur 1 beispielhaft gezeigt ist, erhalten. Unter der Schmelztemperatur ($T_{M(P)}$) wird dann die Temperatur verstanden, bei der der Aufschmelzpeak des Heizlaufs (H) des DSC-Diagramms ein Maximum aufweist. Die Schmelztemperatur ($T_{M(P)}$) ist also von der weiter unten beschriebenen Onset-Temperatur des Aufschmelzens ($T_M^{onset}$) verschieden. Üblicherweise liegt die Schmelztemperatur ($T_{M(P)}$) oberhalb der Onset-Temperatur des Aufschmelzens ($T_M^{onset}$).

Das mindestens eine teilkristalline Polyamid (P) weist außerdem üblicherweise eine Glasübergangstemperatur ($T_{G(P)}$) auf. Die Glasübergangstemperatur ($T_{G(P)}$) des mindestens einen teilkristallinen Polyamids (P) liegt beispielsweise im Bereich von 0 bis 110° C und bevorzugt im Bereich von 40 bis 105° C, gemessen im trockenen Zustand.

"Im trockenen Zustand bedeutet im Rahmen der vorliegenden Erfindung, dass das mindestens eine teilkristalline Polyamid (P) weniger als 3 Gew.-%, bevorzugt weniger als 1 Gew.-% und insbesondere bevorzugt weniger als 0,5 Gew.-% Lösungsmittel (LM), bevorzugt Wasser, enthält, jeweils bezogen auf das Gesamtgewicht des mindestens einen teilkristallinen Polyamids (P).

Für das Lösungsmittel (LM) gelten die nachfolgenden Ausführungen und Bevorzugungen zu dem in Schritt c) eingesetzten Lösungsmittel (LM) entsprechend.

Die Glasübergangstemperatur ($T_{G(P)}$) des mindestens einen teilkristallinen Polyamids (P) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe des mindestens einen teilkristallinen Polyamids (P) (Einwaage ca. 8,5 g) gemessen. Die Heizrate beim ersten Heizlauf (H1) und beim zweiten Heizlauf (H2) beträgt 20 K/min. Die Kühlrate beim Kühllauf (K) beträgt ebenfalls 20 K/min. Im Bereich des Glasübergangs des mindestens einen teilkristallinen Polyamids (P) wird im zweiten Heizlauf (H2) des DSC-Diagramms eine Stufe erhalten. Die Glasübergangstemperatur ($T_{G(P)}$) des mindestens einen teilkristallinen Polyamids (P) entspricht der Temperatur bei halber Stufenhöhe im DSC-Diagramm. Dieses Verfahren zur Bestimmung der Glasübergangstemperatur ($T_G$) ist dem Fachmann bekannt.

Das teilkristalline Polyamid (P) weist außerdem üblicherweise eine Kristallisationstemperatur ($T_{C(P)}$) im Bereich von 130 bis 250 °C auf. Bevorzugt liegt die Kristallisationstemperatur ($T_{C(P)}$) des teilkristallinen Polyamids (P) im Bereich von 145 bis 245 °C und insbesondere bevorzugt im Bereich von 160 bis 235 °C.

Gegenstand der vorliegenden Erfindung ist daher auch ein Verfahren, bei dem das Polyamidpulver (PP) eine Kristallisationstemperatur ($T_{C(P)}$) im Bereich von 135 bis 260 °C aufweist.

Die Kristallisationstemperatur ($T_{C(P)}$) wird im Rahmen der vorliegenden Erfindung ebenfalls mittels dynamischer Differenzkalorimetrie (DDK; Differential Scanning Calorimetry, DSC) bestimmt. Dabei werden, wie vorstehend beschrieben, üblicherweise ein Heizlauf (H) und ein Kühllauf (K) gemessen. Es wird ein DSC-Diagramm, wie es in Figur 1 beispielhaft für das Polyamidpulver gezeigt ist, erhalten. Die Kristallisationstemperatur ($T_{C(P)}$) ist dann die Temperatur am Minimum des Kristallisationspeaks der DSC-Kurve. Die Kristallisationstemperatur ($T_{C(PP)}$) ist also von der weiter unten beschriebenen Onset-Temperatur der Kristallisation ($T_C^{onset}$) verschieden. Die Kristallisationstemperatur ($T_{C(P)}$) liegt üblicherweise unterhalb der Onset-Temperatur der Kristallisation ($T_C^{onset}$).

Additiv (A)

Erfindungsgemäß ist das mindestens eine Additiv (A) ausgewählt aus der Gruppe bestehend aus anorganischen Pigmenten und Stabilisatoren.

"Mindestens ein Additiv (A)" bedeutet im Rahmen der vorliegenden Erfindung sowohl genau ein Additiv (A) als auch eine Mischung aus zwei oder mehreren Additiven (A).

Bevorzugt werden als mindestens ein Additiv (A) zwei oder mehrere Additive (A) eingesetzt, wobei zumindest eines der Additive (A) ausgewählt ist aus der Gruppe bestehend aus anorganischen Pigmenten und zumindest eines der Additive (A) ausgewählt ist aus der Gruppe bestehend aus Stabilisatoren.

Gegenstand der vorliegenden Erfindung ist daher auch ein Verfahren, bei dem als das mindestens eine Additiv (A) zwei oder mehrere Additive (A) eingesetzt werden, wobei zumindest eines der zwei oder mehreren Additive (A) ausgewählt ist aus der Gruppe bestehend aus anorganische Pigmenten und zumindest ein weiteres der zwei oder mehreren Additive (A) ausgewählt ist aus der Gruppe bestehend aus Stabilisatoren.

Unter Stabilisatoren werden im Rahmen der vorliegenden Erfindung Verbindungen verstanden, die als Radikalfänger dienen können.

Bevorzugte Stabilisatoren sind ausgewählt aus der Gruppe bestehend aus sterisch gehinderten Phenolen, sterisch gehinderten Aminen, Phosphiten und Kupferstabilisatoren.

Gegenstand der vorliegenden Erfindung ist daher auch ein Verfahren, bei dem die Stabilisatoren ausgewählt sind aus der Gruppe bestehend aus sterisch gehinderten Phenolen, sterisch gehinderten Aminen, Phosphiten und Kupferstabilisatoren.

Geeignete sterisch gehinderte Phenole sind beispielsweise ausgewählt aus der Gruppe bestehend aus N,N'-Hexamethylen-bis[3-(3,5-di-t-butyl-4-hydroxyphenyl)propionamid], N,N'-Hexan-1,6-diylbis[3-(3,5-di-tert-butyl-4-hydroxyphenylpropionamid], Pentaerythritol tetrakis(3-(3,5-di-tert-butyl-4-hydroxyphenyl)propionate) und Octadecyl-3-(3,5-di-tert-butyl-4-hydroxyphenyl)propionat.

Geeignete sterisch gehinderte Amine sind beispielsweise ausgewählt aus der Gruppe bestehend aus Bis(2,2,6,6-tetramethyl-4-piperidyl)-sebacat, Bis(2,2,6,6-tetramethyl-4-piperidyl)succinat, Bis(1,2,2,6, 6-pentamethyl-4-piperidyl)sebacat, Bis(1-octyloxy-2,2,6,6-tetramethyl-4-piperidyl)sebacat, Bis(1,2,2,6,6-pentamethyl-4-piperidyl)-n-butyl-3,5-di-tert-butyl-4-hydroxybenzylmalonat, dem Kondensationsprodukt aus 1-(2-hydroxyethyl)-2,2,6,6-tetramethyl-4-hydroxypiperidin und Bernsteinsäure, linearen oder zyklischen Kondensaten von N,N'-bis(2,2,6,6-tetramethyl-4-piperidyl)hexamethylenediamin und 4-tert-octylamino-2,6-dichloro-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-ethandiyl)-bis(3,3,5,5-tetramethylpiperazinon), 4-benzoyl-2,2,6,6-tetramethylpiperidin, 4-stearyloxy-2,2,6,6-tetramethylpiperidin, Bis-(12,2,6,6-pentamethylpiperidyl)-2-n-butyl-2-(2-hydroxy-3,5-di-tert-butylbenzyl)malonat, 3-n-octyl-7,7,9,9-tetramethyl-1,3,8-triazaspiro[4.5]decan-2,4-dion, Bis(1-octyloxy-2,2,6,6-tetramethylpiperidyl)sebacat, Bis(1-octyloxy-2,2,6,6-tetramethylpiperidyl)succinate, linearen oder zyklischen Kondensaten von N,N'-bis(2,2,6,6-tetramethyl-4-piperidyl)hexamethylendiamin und 4-morpholino-2,6-dichloro-1,3,5-triazin, dem Kondensat von 2-chloro-4,6-bis(4-n-butylamino-2,2,6,6-tetramethylpiperidyl)-1,3,5-triazin und 1,2-bis(3-aminopropylamino)ethan, dem Kondensat von 2-chloro-4,6-di-(4-n-butylamino-1,2,2,6,6-pentamethylpiperidyl)-1,3,5-triazin und 1,2-bis(3-aminopropylamino)ethan, 8-acetyl-3-dodecyl-7,7,9,9-tetramethyl-1,3,8-triazaspiro[4.5]decan-2,4-dion, 3-dodecyl-1-(2,2,6,6-tetramethyl-4-piperidyl)pyrrolidin-2,5-dion, 3-dodecyl-1-(1,2,2,6,6-pentamethyl-4-piperidyl)pyrrolidin-2,5-dion, eine Mischung von 4-hexadecyloxy- und 4-stearyloxy-2,2,6,6-tetramethylpiperidin, dem Kondensat von N,N'-bis(2,2,6,6-tetramethyl-4-piperidyl)hexamethylendiamin und 4-cyclohexylamino-2,6-dichloro-1,3,5-triazin, dem Kondensat von 1,2-bis(3-aminopropylamino)ethan und 2,4,6-trichloro-1,3,5-triazin sowie 4-butylamino-2,2,6,6-tetramethylpiperidin (CAS Reg. No. [136504-96-6]), dem Kondensat von 1,6-hexandiamin und 2,4,6-trichloro-1,3,5-triazin sowie N,N-dibutylamin und 4-butylamino-2,2,6,6-tetramethylpiperidin (CAS Reg. No. [192268- 64-7]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxospiro[4,5]decan, dem Reaktionsprodukt von 7,7,9,9-tetramethyl-2-cycloundecyl-1-oxa-3,8-diaza-4-oxospiro-[4,5]decan und Epichlorhydrin, 1,1-bis(1,2,2,6,6-pentamethyl-4-piperidyloxycarbonyl)-2-(4-methoxyphenyl)ethen, N,N'-bis-formyl-N,N'-bis(2,2,6,6-tetramethyl-4-piperidyl)hexamethylenediamin, Poly[methylpropyl-3-oxy-4-(2,2,6,6-tetramethyl-4-piperidyl)]siloxan, 2,4-bis[N-(1-cyclohexyloxy-2,2,6,6-tetramethylpiperidin-4-yl)-N-butylamino]-6-(2-hydroxyethyl)amino-1,3,5-triazin, 1-(2-hydroxy-2-methylpropoxy)-4-octadecanoyloxy-2,2,6,6-tetramethylpiperidin, 5-(2-ethylhexanoyl)oxymethyl-3,3,5-trimethyl-2-morpholinon, Sanduvor (Clariant; CAS Reg. No. 106917-31-1], 5-(2-ethylhexanoyl)oxymethyl-3,3,5-trimethyl-2-morpholinon, dem Reaktionsprodukt von 2,4-bis[(1-cyclohexyloxy-2,2,6,6-piperidin-4-yl)butylamino]-6-chloro-s-triazin mit N,N'-bis(3-aminopropyl)ethylendiamin), 1,3,5-tris(N-cyclohexyl-N-(2,2,6,6-tetramethylpiperazine-3-one-4-yl)amino)-s-triazin, 1,3,5-tris(N-cyclohexyl-N-(1,2,2,6,6-pentamethylpiperazin-3-one-4-yl)amino)-s-triazin.

Bevorzugte Kupferstabilisatoren sind Verbindungen des ein- oder zweiwertigen Kupfers. Verbindungen des ein- oder zweiwertigen Kupfers sind beispielsweise Salze des ein- oder zweiwertigen Kupfers mit anorganischen oder organischen Säuren oder ein- oder zweiwertigen Phenolen, Oxide des ein- oder zweiwertigen Kupfers oder Komplexverbindungen von Kupfersalzen mit Ammoniak, Aminen, Amiden, Lactamen, Cyaniden oder Phosphinen. Darüber hinaus sind Cu(I)- oder Cu(II)-Salze der Halgenwasserstoffsäuren, der Cyanwasserstoffsäuren oder die Kupfersalze der aliphatischen Carbonsäuren geeignet. Besonders bevorzugt sind Kupferstabilisatoren ausgewählt aus der Gruppe bestehend aus CuCl, CuBr, CuI, CuCN, $Cu_2O$, $CuCl_2$, $CuSO_4$, CuO, Kupfer(II)acetat und Kupfer(II)stearat.

Geeignete Phosphite sind beispielsweise ausgewählt aus der Gruppe bestehend aus Triphenylphosphit, Diphenylalkylphosphiten, Phenyldialkylphosphiten, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)pentaerythritoldiphosphit, Bis(2,4,6-tris(tert-butylphenyl)pentaerythritoldiphosphit, tristearylsorbitoltriphosphit, Bis(2,4-di-tert-butyl-6-methylphenyl)methylphosphit, Bis(2,4-di-tert-butyl-6-methylphenyl)ethylphosphit und 2,2',2"-nitrilo[triethyl-tris-3,3',5,5'-tetra-tert-butyl-1,1'-biphenyl-2,2'-diyl)phosphit].

Bevorzugt sind die Stabilisatoren ausgewählt aus der Gruppe bestehend aus N,N'-Hexan-1,6-diylbis[3-(3,5-di-tert-butyl-4-hydroxyphenylpropionamid] und Tris(2,4-di-tert-butylphenyl)phosphit.

Unter anorganischen Pigmenten werden anorganische Farbmittel verstanden, die unlöslich in dem mindestens einen teilkristallinen Polyamid (P) sind.

Bevorzugt sind die anorganischen Pigmente ausgewählt aus der Gruppe bestehend aus Ruß und Metalloxiden.

Gegenstand der vorliegenden Erfindung ist daher auch ein Verfahren, bei dem anorganische Pigmente ausgewählt sind aus der Gruppe bestehend aus Ruß und Metalloxiden.

Geeignet sind Ruße mit einem Porenvolumen (DBP Dibutylphthalat-Absorption) gemäß DIN 53601 von mindestens 30 ml/100 g, vorzugsweise mindestens 50 ml/100 g.

Die DBP-Absorptionsrate wird im Allgemeinen nach DIN 53601 oder ASTM-D 2414 bestimmt und stellt ein Maß für die Struktur des jeweiligen Rußes dar. Unter Struktur versteht man die Verkettung von Rußprimärteilchen zu Aggregaten. Zur Bestimmung dieser Formgröße wird zu 10 g Ruß, der in einem Kneter mit messbarer Kraftübertragung (Plastographen) vorgelegt wird, solange Dibutylphthalat zugetropft bis das maximale Drehmoment (Netzpunkt des Rußes) überschritten ist.

Vorzugsweise weist Ruß eine spezifische Oberfläche nach BET gemäß ISO 4652 von mindestens 20 bis 1000 $m^2/g$, vorzugsweise von 30 bis 300 $m^2/g$ auf.

Derartige Ruße sind beispielsweise erhältlich unter dem Handelsnamen Spezialschwarz 4 von Evonik, unter dem Handelsnamen Printex U von Evonik, unter dem Handelsnamen Printex 140 von Evonik, unter dem Handelsnamen Spezialschwarz 350 von Evonik und unter dem Handelsnamen Spezialschwarz 100 von Evonik.

Geeignete Metalloxide sind beispielsweise ausgewählt aus der Gruppe bestehend aus Eisen-Cobalt-Oxiden, Bismutvanadaten, ZnO und $TiO_2$.

Geeignete Metalloxide sind beispielsweise erhältlich unter dem Handelsnamen Sicopal Black K 0090 der BASF SE und dem Handelsnamen Sicopal Black K 0095 der BASF SE.

Schritt a)

In Schritt a) werden das mindestens eine teilkristalline Polyamid (P) und das mindestens eine Additiv (A) in einem Extruder unter Erhalt einer compoundierten Mischung (cM) compoundiert. Die compoundierte Mischung (cM) enthält das mindestens eine teilkristalline Polyamid (P) und das mindestens eine Additiv (A).

Unter "compoundieren" wird im Rahmen der vorliegenden Erfindung das Vermischen des mindestens einen teilkristallinen Polyamids (P) und des mindestens einen Additivs (A) verstanden.

Üblicherweise werden das mindestens eine teilkristalline Polyamid (P) und das mindestens eine Additiv (A) in den Mengen miteinander compoundiert wie sie in der in Schritt a) erhaltenen compoundierten Mischung (cM) und in der in Schritt b) erhaltenen extrudierten Mischung (eM) enthalten sein sollen.

Daher werden üblicherweise im Bereich von 90 bis 99,95 Gew.-% des mindestens einen teilkristallinen Polyamids (P) und im Bereich von 0,05 bis 10 Gew.-% des mindestens einen Additivs (A) compoundiert, jeweils bezogen auf das Gesamtgewicht des mindestens einen teilkristallinen Polyamids (P) und des mindestens einen Additivs (A).

Bevorzugt werden im Bereich von 95 bis 99,95 Gew.-% des mindestens einen teilkristallinen Polyamids (P) und im Bereich von 0,05 bis 5 Gew.-% des mindestens einen Additivs (A) compoundiert, jeweils bezogen auf das Gesamtgewicht des mindestens einen teilkristallinen Polyamids (P) und des mindestens einen Additivs (A).

Besonders bevorzugt werden im Bereich von 98 bis 99,95 Gew.-% des mindestens einen teilkristallinen Polyamids (P) und im Bereich von 0,05 bis 2 Gew.-% des mindestens einen Additivs (A) compoundiert, jeweils bezogen auf das Gesamtgewicht des mindestens einen teilkristallinen Polyamids (P) und des mindestens einen Additivs (A).

In einer weiteren Ausführungsform der vorliegenden Erfindung werden in Schritt a) im Bereich von 60 bis < 95 Gew.-% des mindestens einen teilkristallinen Polyamids (P) und im Bereich von > 5 bis 40 Gew.-% des mindestens einen Additivs (A) compoundiert, jeweils bezogen auf das Gesamtgewicht des mindestens einen teilkristallinen Polyamids (P) und des mindestens einen Additivs (A).

Die Summe der Gewichtsprozente des mindestens einen teilkristallinen Polyamids (P) und des mindestens einen Additivs (A) ergibt üblicherweise 100 Gew.-%.

Das mindestens eine teilkristalline Polyamid (P) und das mindestens eine Additiv (A) können während des Compoundierens in Schritt a) miteinander reagieren. Bevorzugt reagieren das mindestens eine teilkristalline Polyamid (P) und das mindestens eine Additiv (A) während des Compoundierens in Schritt a) nicht miteinander.

Es versteht sich von selbst, dass sich die Gewichtsprozente des mindestens einen teilkristallinen Polyamids (P) und des mindestens einen Additivs (A) auf die Gewichtsprozente beziehen, bevor das mindestens eine teilkristalline Polyamid (P) und das mindestens eine Additiv (A) gegebenenfalls miteinander reagiert haben.

Schritt a) kann bei beliebigen Temperaturen erfolgen, wobei es bevorzugt ist, dass bei den Temperaturen, bei denen Schritt a) durchgeführt wird, das mindestens eine teilkristalline Polyamid (P) in geschmolzener Form vorliegt.

"In geschmolzener Form" bedeutet, dass das mindestens eine teilkristalline Polyamid (P) eine Temperatur aufweist, die oberhalb der Schmelztemperatur ($T_{M(P)}$) des mindestens einen teilkristallinen Polyamids (P) liegt. "In geschmolzener Form" bedeutet also im Rahmen der vorliegenden Erfindung, dass der Schritt a) bei einer Temperatur durchgeführt wird, die oberhalb der Schmelztemperatur ($T_{M(P)}$) des mindestens einen teilkristallinen Polyamids liegt. Liegt das mindestens eine teilkristalline Polyamid (P) in geschmolzener Form vor, so ist das mindestens eine teilkristalline Polyamid (P) fließfähig.

"Fließfähig" bedeutet, dass das mindestens eine teilkristalline Polyamid (P) in dem Extruder gefördert werden kann und dass das mindestens eine teilkristalline Polyamid (P) aus dem Extruder extrudiert werden kann.

Bei den Temperaturen, bei denen Schritt a) durchgeführt wird, kann das mindestens eine Additiv (A) ebenfalls in geschmolzener Form vorliegen. Ebenso ist es möglich, dass das mindestens eine Additiv (A) bei den Temperaturen, bei denen Schritt a) durchgeführt wird in fester Form vorliegt.

"In geschmolzener Form" bedeutet dann, dass das mindestens eine Additiv (A) eine Temperatur aufweist, die oberhalb der Schmelztemperatur ($T_{M(A)}$) des mindestens einen Additivs (A) liegt. "In geschmolzener Form" bedeutet dann also, dass der Schritt a) auch bei einer Temperatur durchgeführt wird, die oberhalb der Schmelztemperatur ($T_{M(A)}$) des mindestens einen Additivs (A) liegt.

"In fester Form" bedeutet dann, dass das mindestens eine Additiv (A) eine Temperatur aufweist, die unterhalb der Schmelztemperatur ($T_{M(A)}$) des mindestens einen Additivs (A) liegt. "In fester Form" bedeutet dann also, dass der Schritt a) bei einer

Temperatur durchgeführt wird, die unterhalb der Schmelztemperatur ($T_{M(A)}$) des mindestens einen Additivs (A) liegt.

Beispielsweise wird Schritt a) bei einer Temperatur im Bereich von 220 bis 320° C durchgeführt, bevorzugt im Bereich von 240 bis 300° C und insbesondere bevorzugt im Bereich von 270 bis 290° C.

Unter der Temperatur, bei der Schritt a) durchgeführt wird, wird im Rahmen der vorliegenden Erfindung die Manteltemperatur des Extruders verstanden.

Gegenstand der vorliegenden Erfindung ist daher auch ein Verfahren, bei dem die Manteltemperatur der beheizten Gehäuse des Extruders während des Compoundierens in Schritt a) im Bereich von 220 bis 320°C, bevorzugt im Bereich von 240 bis 300°C und insbesondere bevorzugt im Bereich von 270 bis 290°C, liegt.

Unter der "Manteltemperatur des Extruders" wird die Temperatur des Mantels des Extruders verstanden. Die Manteltemperatur des Extruders ist also die Temperatur der Außenwand des Gehäuses des Extruders.

Die Manteltemperatur des Extruders kann höher sein als die Temperatur der im Extruder enthaltenen Komponenten (des mindestens einen teilkristallinen Polyamids (P) und des mindestens einen Additivs (A)), ebenso ist es möglich, dass die Manteltemperatur des Extruders niedriger ist als die Temperatur der Komponenten im Extruder. Beispielsweise ist es möglich, dass die Manteltemperatur des Extruders zunächst höher ist als die Temperatur der Komponenten im Extruder, wenn die Komponenten erwärmt werden. Werden die Komponenten im Extruder abgekühlt, so ist es möglich, dass die Manteltemperatur des Extruders niedriger ist als die Temperatur der Komponenten im Extruder.

Zum Compoundieren des mindestens einen teilkristallinen Polyamids (P) und des mindestens einen Additivs (A) in dem Extruder können das mindestens eine teilkristalline Polyamid (P) und das mindestens eine Additiv (A) dem Extruder nach dem Fachmann bekannten Methoden zugeführt werden. Beispielsweise kann das mindestens eine teilkristalline Polyamid (P) dem Extruder in geschmolzener oder in fester Form zugeführt werden. Ebenso kann das mindestens eine Additiv (A) dem Extruder in geschmolzener oder in fester Form zugeführt werden.

Wird das mindestens eine teilkristalline Polyamid (P) dem Extruder in fester Form zugeführt, so kann es dem Extruder beispielsweise als Granulat und/oder als Pulver zugeführt werden. Das mindestens eine teilkristalline Polyamid (P) kann dann in dem Extruder aufgeschmolzen werden. Diese Ausführungsform ist bevorzugt.

Entsprechend kann auch das mindestens eine Additiv (A) dem Extruder in fester Form zugeführt werden, beispielsweise als Granulat oder als Pulver, bevorzugt als Pulver und dann gegebenenfalls in dem Extruder aufgeschmolzen werden.

Darüber hinaus ist es möglich, dass zunächst das mindestens eine teilkristalline Polyamid (P) direkt in dem Extruder hergestellt wird, dann das mindestens eine Additiv (A) dem Extruder zugeführt wird und schließlich mit dem in dem Extruder hergestellten teilkristallinen Polyamid (P) compoundiert wird.

Als Extruder eignen sich alle dem Fachmann bekannten Extruder.

In Schritt a) kann zusätzlich ein Zusatzstoff mit dem mindestens einen teilkristallinen Polyamid (P) und dem mindestens einen Additiv (A) compoundiert werden. Geeignete Zusatzstoffe sind dem Fachmann bekannt und beispielsweise Talkum, Erdalkalisilikate, Erdalkaliglycerophosphate, Füllstoffe, wie Glaskugeln, Glasfasern, Kohlefasern, Nanotubes und Kreide, sowie schlagzähmodifizierte Polymere, beispielsweise auf Basis von Ethylen-Propylen (EPM) oder Ethylen-Propylen-Dien (EPDM), Kautschuken oder thermoplastischen Polyurethanen, Flammschutzmittel, Weichmacher und/oder Haftvermittler.

Beispielsweise können im Bereich von 0,1 bis 50 Gew.-% eines Zusatzstoffs, bevorzugt im Bereich von 0,1 bis 40 Gew.-% und insbesondere bevorzugt im Bereich von 0,1 bis 20 Gew.-% eines Zusatzstoffs zusätzlich compoundiert werden, jeweils bezogen auf das Gesamtgewicht des mindestens einen teilkristallinen Polyamids (P), des mindestens einen Additivs (A) und des Zusatzstoffs.

Es versteht sich von selbst, dass, wenn zusätzlich ein Zusatzstoff compoundiert wird, sich dann auch die Gewichtsprozente des mindestens einen teilkristallinen Polyamids (P) und des mindestens einen Additivs (A) auf das Gesamtgewicht des mindestens einen teilkristallinen Polyamids (P), des mindestens einen Additivs (A) und des Zusatzstoffs beziehen.

Die Summe der Gewichtsprozente des mindestens einen teilkristallinen Polyamids (P), des mindestens einen Additivs (A) und des Zusatzstoffs ergibt dann üblicherweise 100 Gew.-%.

In Schritt a) wird die compoundierte Mischung (cM) erhalten.

Die in Schritt a) erhaltene compoundierte Mischung (cM) enthält das mindestens eine Additiv (A) üblicherweise dispergiert in dem mindestens einen teilkristallinen Polyamid (P).

Das mindestens eine Additiv (A) bildet dann die disperse Phase (innere Phase), das mindestens eine teilkristalline Polyamid (P) bildet das Dispersionsmedium (kontinuierliche Phase). Die compoundierte Mischung (cM) enthält das mindestens eine teilkristalline Polyamid (P) und das mindestens eine Additiv (A) üblicherweise in denselben Mengen, in denen das mindestens eine teilkristalline Polyamid (P) und das mindestens eine Additiv (A) miteinander compoundiert worden sind.

Daher enthält die compoundierte Mischung (cM) üblicherweise im Bereich von 95 bis 99,95 Gew.-% des mindestens einen teilkristallinen Polyamids (P) und im Bereich von 0,05 bis 5 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der compoundierten Mischung (cM).

Bevorzugt enthält die compoundierte Mischung (cM) im Bereich von 95 bis 99,95 Gew.-% des mindestens einen teilkristallinen Polyamids (P) und im Bereich von 0,05 bis 5 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der compoundierten Mischung (cM).

Besonders bevorzugt enthält die compoundierte Mischung (cM) im Bereich von 98 bis 99,95 Gew.-% des mindestens einen teilkristallinen Polyamids (P) und im Bereich von 0,05 bis 2 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der compoundierten Mischung (cM).

In einer weiteren Ausführungsform enthält die compoundierte Mischung (cM) im Bereich von 60 bis < 95 Gew.-% des mindestens einen teilkristallinen Polyamids (P) und im Bereich von > 5 bis 40 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der compoundierten Mischung (cM).

Es versteht sich von selbst, dass, wenn in Schritt a) zusätzlich ein Zusatzstoff compoundiert worden ist, dann auch die compoundierte Mischung (cM) den Zusatzstoff enthält.

Schritt b)

Erfindungsgemäß wird in Schritt b) die in Schritt a) erhaltene compoundierte Mischung (cM) aus dem Extruder extrudiert, unter Erhalt einer extrudierten Mischung (eM). Die extrudierte Mischung (eM) enthält das mindestens eine teilkristalline Polyamid (P) und das mindestens eine Additiv (A).

Die Extrusion der in Schritt a) erhaltenen compoundierten Mischung (cM) kann nach allen dem Fachmann bekannten Methoden erfolgen. Üblicherweise wird die compoundierte Mischung (cM) extrudiert und dabei granuliert. Verfahren zur Granulierung sind dem Fachmann bekannt. Beispielsweise kann die compoundierte Mischung (cM) extrudiert und in einem Wasserbad abgekühlt werden und anschließend stranggranuliert werden. Darüber hinaus ist eine Wassergranulierung möglich. Diese ist dem Fachmann als solche bekannt. Erfindungsgemäß bevorzugt ist die Abkühlung in einem Wasserbad mit anschließender Stranggranulierung.

Gegenstand der vorliegenden Erfindung ist daher auch ein Verfahren, bei dem die in Schritt a) erhaltene compoundierte Mischung (cM) in Schritt b) extrudiert und in einem Wasserbad abgekühlt wird und anschließend stranggranuliert wird.

Bei der Extrusion der compoundierten Mischung (cM) kühlt die compoundierte Mischung (cM) üblicherweise ab, sodass sie fest wird. Die extrudierte Mischung (eM) liegt daher bevorzugt in fester Form, insbesondere bevorzugt als Granulat vor.

"In fester Form" bedeutet, dass die compoundierte Mischung (cM) eine Temperatur aufweist, die unterhalb der Schmelztemperatur ($T_{M(P)}$), bevorzugt unterhalb der Glasübergangstemperatur ($T_{G(P)}$), des in der compoundierten Mischung (cM) enthaltenen mindestens einen teilkristallinen Polyamids (P) liegt.

Beispielsweise wird die compoundierte Mischung (cM) bei der Extrusion während Schritt b) granuliert auf eine Partikelgröße im Bereich von 0,5 bis 6 mm, bevorzugt im Bereich von 3 bis 5 mm und insbesondere bevorzugt im Bereich von 4 bis 5 mm.

Gegenstand der vorliegenden Erfindung ist daher auch ein Verfahren, bei dem die compoundierte Mischung (cM) bei der Extrusion während Schritt b) granuliert wird auf eine Partikelgröße im Bereich von 0,5 bis 5 mm.

Die in Schritt b) erhaltene extrudierte Mischung (eM) enthält üblicherweise die gleichen Mengen an dem mindestens einen teilkristallinen Polyamid (P) und dem mindestens einen Additiv (A) wie die in Schritt a) erhaltene compoundierte Mischung (cM).

Bezüglich der Gew.-% des mindestens einen teilkristallinen Polyamids (P) und des mindestens einen Additivs (A) sowie gegebenenfalls des Zusatzstoffs in der extrudierten Mischung (eM) gelten daher die zuvor beschriebenen Ausführungen und Bevorzugungen für die Gew.-% des mindestens einen teilkristallinen Polyamids und des mindestens einen Additivs (A) sowie gegebenenfalls des Zusatzstoffs in der compoundierten Mischung (cM) entsprechend.

Beispielsweise enthält die in Schritt b) erhaltene extrudierte Mischung (eM) im Bereich von 0,05 bis 5 Gew.-%, bevorzugt im Bereich von 0,05 bis 2 Gew.-% des mindestens einen Additivs (A), bezogen auf das Gesamtgewicht der extrudierten Mischung (eM).

Gegenstand der vorliegenden Erfindung ist daher auch ein Verfahren, bei dem die in Schritt b) erhaltene extrudierte Mischung (eM) im Bereich von 0,05 bis 6 Gew.-% des mindestens einen Additivs (A) enthält, bezogen auf das Gesamtgewicht der extrudierten Mischung (eM).

In einer weiteren Ausführungsform enthält die in Schritt b) erhaltene extrudierte Mischung (eM) im Bereich von > 5 bis 50 Gew.-% des mindestens einen Additivs (A), bevorzugt im Bereich von 10 bis 40 Gew.-% des mindestens einen Additivs (A) und insbesondere bevorzugt im Bereich von 10 bis 30 Gew.-%, bezogen auf das Gesamtgewicht der extrudierten Mischung (eM).

Gegenstand der vorliegenden Erfindung ist daher auch ein Verfahren, bei dem die in Schritt b) erhaltene extrudierte Mischung (eM) im Bereich von > 5 bis 50 Gew.-% des mindestens einen Additivs (A) enthält, bezogen auf das Gesamtgewicht der extrudierten Mischung (eM).

Es versteht sich von selbst, dass, wenn die in Schritt a) erhaltene compoundierte Mischung (cM) zusätzlich den Zusatzstoff enthalten hat, dann auch die extrudierte Mischung (eM) diesen Zusatzstoff enthält.

Schritt c)

In Schritt c) wird die in Schritt b) erhaltene extrudierte Mischung (eM) in ein Lösungsmittel (LM) eingebracht, unter Erhalt einer ersten Suspension (S1). Die erste Suspension (S1) enthält die extrudierte Mischung (eM) und das Lösungsmittel (LM).

Das Einbringen der in Schritt b) erhaltenen extrudierten Mischung (eM) in das Lösungsmittel (LM) kann nach allen dem Fachmann bekannten Methoden erfolgen. Beispielsweise kann die in Schritt b) erhaltene extrudierte Mischung (eM) direkt nach ihrer Granulierung in das Lösungsmittel (LM) eingebracht werden.

Die Temperatur des Lösungsmittels (LM) während Schritt c) liegt beispielsweise im Bereich von 5 bis 100° C, bevorzugt im Bereich von 10 bis 70° C und insbesondere bevorzugt im Bereich von 15 bis 50° C.

Das Lösungsmittel (LM) kann während des Einbringens der extrudierten Mischung (eM) mit einem Rührer gerührt werden.

Als Rührer eignen sich alle dem Fachmann bekannten Rührer, beispielsweise Propellerrührer, Ankerrührer, Kreuzbalkenrührer ggf mit oder ohne Stromstörer.

Beispielsweise kann das Lösungsmittel (LM) mit einem spezifischen Leistungseintrag des Rührers im Bereich von 100 bis 500 W/m$^3$ gerührt werden. Bevorzugt wird es mit einem spezifischen Leistungseintrag im Bereich von 150 bis 450 W/m$^3$ und insbesondere bevorzugt mit einem spezifischen Leistungseintrag von 200 bis 400 W/m$^3$ gerührt. Der spezifische Leistungseintrag berechnet sich nach der folgenden Beziehung: p=P/V, wobei sich die Leistung P mit P=k2*n^3*d^5*rho berechnen lässt, wobei k2 eine rührerspezifische Konstante (siehe Quelle), n die Drehzahl und d der Rührerdurchmesser und rho die Dichte des Mediums ist und V dem gerührten Volumen entspricht. Quelle: Ullmanns Encyclopedia of Industrial Chemistry, Marko Zlokarnik, 2012 Wiley-VCH Verlag GmbH & Co. KGaA, Weinheim, DOI: 10.1002/14356007.b02_25.

Als Lösungsmittel (LM) eignen sich alle dem Fachmann bekannten Lösungsmittel, in denen das mindestens eine teilkristalline Polyamid (P) löslich ist. Bevorzugt ist das Lösungsmittel (LM) ausgewählt aus der Gruppe bestehend aus Lactamen, Wasser und Mischungen daraus.

Gegenstand der vorliegenden Erfindung ist daher auch ein Verfahren, bei dem das Lösungsmittel (LM) ausgewählt ist aus der Gruppe bestehend aus Lactamen, Wasser und Mischungen daraus.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam), 8-Aminooctansäurelactam (η-Lactam; η-Octanolactam; Capryllactam), 9-Nonansäurelactam (θ-Lactam; θ-Nonanolactam), 10-Decansäurelactam (ω-Decanolactam; Caprinlactam), 11-Undecansäurelactam (ω-Undecanolactam) und 12-Dodecansäurelactam (ω-Dodecanoiactam; Laurolactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen.

Bevorzugt sind Lactame unsubstituiert.

Besonders bevorzugt ist 12-Dodecansäurelactam (ω-Dodecanolactam) und/oder ε-Lactam (ε-Caprolactam) und am meisten bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel $C_6H_{11}NO$. Verfahren zur Herstellung von Caprolactam sind dem Fachmann bekannt.

Bevorzugt wird als Lösungsmittel (LM) eine Mischung aus Lactam und Wasser eingesetzt. Bevorzugt wird als Lösungsmittel (LM) eine Mischung eingesetzt, die Lactam und Wasser enthält. Beispielsweise wird als Lösungsmittel (LM) eine Mischung enthaltend im Bereich von 30 bis 60 Gew.-% Lactam und im Bereich von 40 bis 70 Gew.-% Wasser verwendet, bezogen auf das Gesamtgewicht der Mischung.

Bevorzugt wird als Lösungsmittel (LM) eine Mischung aus im Bereich von 30 bis 50 Gew.-% Lactam und im Bereich von 50 bis 70 Gew.-% Wasser eingesetzt, jeweils bezogen auf das Gesamtgewicht der Mischung.

Am meisten bevorzugt wird als Lösungsmittel (LM) eine Mischung aus im Bereich von 35 bis 45 Gew.-% Lactam und im Bereich von 65 bis 75 Gew.-% Wasser eingesetzt, jeweils bezogen auf das Gesamtgewicht der Mischung.

Gegenstand der vorliegenden Erfindung ist daher auch ein Verfahren, bei dem das Lösungsmittel (LM) eine Mischung aus im Bereich von 30 bis 60 Gew.-% Lactam und im Bereich von 40 bis 70 Gew.-% Wasser ist, jeweils bezogen auf das Gesamtgewicht der Mischung.

Gegenstand der vorliegenden Erfindung ist außerdem ein Verfahren, bei dem das Lösungsmittel (LM) aus einer Mischung aus im Bereich von 30 bis 60 Gew.-% Lactam und im Bereich von 40 bis 70 Gew.-% Wasser besteht, jeweils bezogen auf das Gesamtgewicht der Mischung.

In Schritt c) wird eine erste Suspension (S1) erhalten. Die erste Suspension (S1) enthält das Lösungsmittel (LM) als Dispersionsmedium (äußere Phase) und die extrudierte Mischung (eM) als disperse Phase (innere Phase).

Beispielsweise enthält die erste Suspension (S1) im Bereich von 1 bis 25 Gew.-% der extrudierten Mischung (eM) und im Bereich von 75 bis 99 Gew.-% des Lösungsmittels (LM), bezogen auf das Gesamtgewicht der ersten Suspension (S1).

Bevorzugt enthält die erste Suspension (S1) im Bereich von 4 bis 20 Gew.-% der extrudierten Mischung (eM) und im Bereich von 80 bis 96 Gew.-% des Lösungsmittels (LM), bezogen auf das Gesamtgewicht der ersten Suspension (S1).

Am meisten bevorzugt enthält die erste Suspension (S1) im Bereich von 7 bis 15 Gew.-% der extrudierten Mischung (eM) und im Bereich von 85 bis 93 Gew.-% des Lösungsmittels (LM), bezogen auf das Gesamtgewicht der ersten Suspension (S1).

Gegenstand der vorliegenden Erfindung ist daher auch ein Verfahren, bei dem die in Schritt c) erhaltene erste Suspension (S1) im Bereich von 1 bis 25 Gew.-% der extrudierten Mischung (eM) und im Bereich von 75 bis 99 Gew.-% des Lösungsmittels (LM) enthält, bezogen auf das Gesamtgewicht der ersten Suspension (S1).

Schritt d)

In Schritt d) wird die in Schritt c) erhaltene erste Suspension (S1) auf eine erste Temperatur (T1) erwärmt. Dabei löst sich das in der extrudierten Mischung (eM) enthaltene mindestens eine teilkristalline Polyamid (P) in dem Lösungsmittel (LM) unter Erhalt eines Gemischs (G). Das Gemisch (G) enthält das mindestens eine teilkristalline Polyamid (P) gelöst in dem Lösungsmittel (LM) und das mindestens eine Additiv (A).

Die erste Temperatur (T1), auf die die in Schritt c) erhaltene erste Suspension (S1) in Schritt d) erwärmt wird, ist abhängig von der Art des verwendeten Lösungsmittels (LM), von dem eingesetzten mindestens einen teilkristallinen Polyamid (P) und von der Konzentration des mindestens einen teilkristallinen Polyamids (P) in dem Lösungsmittel (LM).

Beispielsweise wird die erste Suspension (S1) in Schritt d) auf eine erste Temperatur (T1) erwärmt, die im Bereich von 140 bis 200° C liegt, bevorzugt im Bereich von 150 bis 195° C und insbesondere bevorzugt im Bereich von 170 bis 190° C.

Gegenstand der vorliegenden Erfindung ist daher auch ein Verfahren, bei dem die in Schritt c) erhaltene erste Suspension (S1) in Schritt d) auf eine erste Temperatur (T1), die im Bereich von 140 bis 200 °C liegt, erwärmt wird.

Das Erwärmen in Schritt d) kann beispielsweise mit einer Heizrate im Bereich von 0,5 bis 5 K/min erfolgen, bevorzugt mit einer Heizrate im Bereich von 1 bis 4 K/min und insbesondere bevorzugt mit einer Heizrate im Bereich von 2 bis 3 K/min.

Darüber hinaus ist es möglich, dass die erste Suspension (S1) und/oder das Gemisch (G) für einen Zeitraum im Bereich von 0,1 bis 10 Stunden, bevorzugt im Bereich von 0,1 bis 5 Stunden bei der ersten Temperatur (T1) gehalten wird.

Es ist außerdem bevorzugt, dass die in Schritt c) erhaltene erste Suspension (S1) in zumindest zwei Stufen auf die erste Temperatur (T1) erwärmt wird. Beispielsweise wird die erhaltene erste Suspension (S1) zunächst auf eine erste Temperatur (T1-1) erwärmt, die im Bereich von 140 bis < 170° C liegt, und bei dieser Temperatur für 1 bis 5 Stunden gehalten. Anschließend wird die erste Suspension (S1) weiter erwärmt auf eine zweite erste Temperatur (T1-2), die beispielsweise im Bereich von 170 bis 190° C liegt, und dort für 0,1 bis 2 Stunden gehalten.

Gegenstand der vorliegenden Erfindung ist daher auch ein Verfahren, bei dem die in Schritt c) erhaltene erste Suspension in Schritt d) zunächst auf eine erste erste Temperatur (T1-1), die im Bereich von 140 bis < 170 °C liegt, erwärmt wird und anschließend auf eine zweite erste Temperatur (T1-2), die im Bereich von 170 bis 190 °C liegt, erwärmt wird.

Das Erwärmen in Schritt d) kann nach allen dem Fachmann bekannten Methoden erfolgen.

Bevorzugt wird die erste Suspension (S1) während des Erwärmens in Schritt d) mit einem Rührer gerührt. Als Rührer eignen sich alle dem Fachmann bekannten Rührer, beispielsweise Propellerrührer Ankerrührer, Kreuzbalkenrührer, ggf. mit oder ohne Stromstörer.

Wird in Schritt d) die erste Suspension (S1) gerührt, so ist es bevorzugt, dass der spezifische Leistungseintrag des Rührers in die erste Suspension (S1) im Bereich von 100 bis 500 W/m$^3$ liegt, besonders bevorzugt im Bereich von 150 bis 450 W/m$^3$ und insbesondere bevorzugt im Bereich von 200 bis 400 W/m$^3$. Der spezifische Leistungseintrag ist, wie vorstehend beschrieben, definiert.

Gegenstand der vorliegenden Erfindung ist daher auch ein Verfahren, bei dem in Schritt d) die erste Suspension (S1) während des Erwärmens mit einem Rührer gerührt wird, wobei der spezifische Leistungseintrag des Rührers in die erste Suspension (S1) im Bereich von 100 bis 500 W/m$^3$ liegt.

Beim Erwärmen löst sich das mindestens eine teilkristalline Polyamid (P) in dem Lösungsmittel (LM). Bei der ersten Temperatur (T1) liegt das mindestens eine teilkristalline Polyamid (P) vollständig gelöst in dem Lösungsmittel (LM) vor. Dies bedeutet, dass die Moleküle des mindestens einen teilkristallinen Polyamids (P) homogen und statistisch in dem Lösungsmittel (LM) verteilt sind und dass sich die Moleküle des mindestens einen teilkristallinen Polyamids (P) durch Filtration nicht abtrennen lassen.

Das mindestens eine Additiv (A) kann sich ebenfalls in dem Lösungsmittel (LM) lösen. Darüber hinaus ist es möglich, dass sich das mindestens eine Additiv (A) in dem Lösungsmittel (LM) nicht löst.

Löst sich das mindestens eine Additiv (A) nicht in dem Lösungsmittel (LM), dann liegt das mindestens eine Additiv (A) suspendiert in dem Lösungsmittel (LM), das das mindestens eine teilkristalline Polyamid (P) gelöst enthält, vor. Das mindestens eine Additiv (A) bildet dann die dispergierte Phase (innere Phase), das Lösungsmittel (LM), das das mindestens eine teilkristalline Polyamid (P) gelöst enthält, bildet dann das Dispersionsmedium (äußere Phase).

Die gegebenenfalls enthaltenen Zusatzstoffe können ebenfalls in dem Lösungsmittel (LM) gelöst vorliegen. Ebenso ist es möglich, dass sich die Zusatzstoffe nicht in dem Lösungsmittel (LM) lösen und suspendiert in dem Lösungsmittel (LM), das das mindestens eine teilkristalline Polyamid (P) gelöst enthält, vorliegen.

Schritt e)

In Schritt e) wird das in Schritt d) erhaltene Gemisch (G) auf eine zweite Temperatur (T2) abgekühlt. Dabei kristallisiert das mindestens eine teilkristalline Polyamid (P), unter Erhalt einer zweiten Suspension (S2), die das Polyamidpulver (PP) suspendiert in dem Lösungsmittel (LM) enthält.

Die zweite Temperatur (T2), auf die das in Schritt d) erhaltene Gemisch (G) in Schritt e) abgekühlt wird, ist abhängig von dem verwendeten Lösungsmittel (LM), von dem mindestens einen teilkristallinen Polyamid (P) sowie von der Konzentration des mindestens einen teilkristallinen Polyamids (P) in dem Lösungsmittel (LM). Beispielsweise wird das in Schritt d) erhaltene Gemisch (G) in Schritt e) auf eine zweite Temperatur (T2), die im Bereich von 100 bis 140 °C liegt, bevorzugt im Bereich von 105 bis 135 °C und insbesondere bevorzugt im Bereich von 110 bis 125 °C, abgekühlt.

Gegenstand der vorliegenden Erfindung ist daher auch ein Verfahren, bei dem das in Schritt d) erhaltene Gemisch (G) in Schritt e) auf eine zweite Temperatur (T2), die im Bereich von 100 bis 140 °C liegt, abgekühlt wird.

Es versteht sich von selbst, dass die zweite Temperatur (T2), auf die das Gemisch (G) in Schritt e) abgekühlt wird, unterhalb der ersten Temperatur (T1) liegt, auf die die erste Suspension (S1) in Schritt d) erwärmt wird.

Die Abkühlrate in Schritte) liegt beispielsweise im Bereich von 0,5 bis 10 °C/min, bevorzugt im Bereich von 1 bis 6 °C/min und insbesondere bevorzugt im Bereich von 2 bis 4 °C/min.

Es ist möglich, dass das Gemisch (G) in Schritt e) für einen Zeitraum im Bereich von 0,1 bis 2 Stunden, bevorzugt im Bereich von 0,2 bis 1,5 Stunden und insbesondere im Bereich von 0,3 bis 1 Stunden bei der zweiten Temperatur (T2) gehalten wird.

Das Abkühlen kann nach dem Fachmann bekannten Methoden erfolgen.

Bevorzugt wird das Gemisch (G) während des Abkühlens in Schritt e) mit einem Rührer gerührt. Der spezifische Leistungseintrag des Rührers in das Gemisch (G) liegt vorzugsweise im Bereich von 100 bis 500 W/m$^3$, besonders bevorzugt im Bereich von 150 bis 450 W/m$^3$ und insbesondere bevorzugt im Bereich von 200 bis 400 W/m$^3$. Der spezifische Leistungseintrag des Rührers ist, wie vorstehend beschrieben, definiert.

Gegenstand der vorliegenden Erfindung ist daher auch ein Verfahren, bei dem zumindest das Gemisch (G) während Schritt e) mit einem Rührer gerührt wird, wobei der spezifische Leistungseintrag des Rührers in das Gemisch (G) im Bereich von 100 bis 500 W/m$^3$ liegt.

Beim Abkühlen kristallisiert das mindestens eine teilkristalline Polyamid (P) aus und es wird die zweite Suspension (S2) erhalten, die das Polyamidpulver (PP) und das Lösungsmittel (LM) enthält.

Das Polyamidpulver (PP) wird weiter unten näher beschrieben.

In der zweiten Suspension (S2) bildet das Polyamidpulver (PP) die dispergierte Phase (innere Phase) und das Lösungsmittel (LM) das Dispersionsmedium (kontinuierliche Phase; äußere Phase). Die zweite Suspension (S2) enthält üblicherweise im Bereich von 1 bis 25 Gew.-% des Polyamidpulvers (PP) und im Bereich von 75 bis 99 Gew.-% des Lösungsmittels (LM), jeweils bezogen auf das Gesamtgewicht der zweiten Suspension (S2).

Bevorzugt enthält die zweite Suspension im Bereich von 4 bis 20 Gew.-% des Polyamidpulvers (PP) und im Bereich von 80 bis 90 Gew.-% des Lösungsmittels (LM), bezogen auf das Gesamtgewicht der zweiten Suspension (S2).

Am meisten bevorzugt enthält die zweite Suspension (S2) im Bereich von 7 bis 15 Gew.-% des Polyamidpulvers (PP) und im Bereich von 85 bis 93 Gew.-% des Lösungsmittels (LM), bezogen auf das Gesamtgewicht der zweiten Suspension (S2).

Schritt f)

In Schritt f) wird das Polyamidpulver (PP) aus der in Schritt e) erhaltenen zweiten Suspension (S2) abgetrennt.

Das Abtrennen des Polyamidpulvers (PP) kann nach allen dem Fachmann bekannten Verfahren erfolgen, wie beispielsweise durch Filtration und/oder Zentrifugieren. In Schritt f) wird somit das Polyamidpulver (PP) von dem Lösungsmittel (LM) der zweiten Suspension (S2) abgetrennt.

Das so erhaltene Polyamidpulver (PP) kann gegebenenfalls weiter aufgearbeitet werden. In einer bevorzugten Ausführungsform wird das Polyamidpulver (PP) mit Wasser gewaschen, um gegebenenfalls enthaltene Reste des Lösungsmittels (LM) vom Polyamidpulver (PP) abzutrennen.

In einer weiteren bevorzugten Ausführungsform wird das Polyamidpulver (PP) nach der Abtrennung in Schritt f) mit Wasser gewaschen und nachfolgend getrocknet.

Die Trocknung kann hierbei thermisch erfolgen. Bevorzugte thermische Trocknungsverfahren sind beispielsweise die Trocknung in einer mit Heißluft beaufschlagten Wirbelschicht oder die Trocknung unter Stickstoffatmosphäre und/oder im Vakuum bei erhöhten Temperaturen, beispielsweise im Bereich von 50 bis 80° C.

Polyamidpulver (PP)

Das nach dem erfindungsgemäßen Verfahren erhältliche Polyamidpulver (PP) weist einen besonders geringen Feinanteil auf, wobei unter dem Feinanteil Partikel mit einer Größe von < 20 μm verstanden werden.

Beispielsweise liegt der Feinanteil im erfindungsgemäß hergestellten Polyamidpulver (PP) bei < 10 Gew.-%, bevorzugt bei < 8 Gew.-% und insbesondere bevorzugt bei < 5 Gew.-%, jeweils bezogen auf das Gesamtgewicht des Polyamidpulvers (PP).

Darüber hinaus weist das erfindungsgemäß hergestellte Polyamidpulver (PP) eine besonders enge Partikelgrößenverteilung auf.

Beispielsweise weist das Polyamidpulver (PP)

einen D10-Wert im Bereich von 10 bis 30 μm,
einen D50-Wert im Bereich von 25 bis 70 μm und
einen D90-Wert im Bereich von 50 bis 150 μm auf.

Bevorzugt weist das erfindungsgemäße Polyamidpulver (PP)

einen D10-Wert im Bereich von 20 bis 30 μm,
einen D50-Wert im Bereich von 40 bis 60 μm und
einen D90-Wert im Bereich von 80 bis 110 μm auf.

Gegenstand der vorliegenden Erfindung ist daher auch ein Verfahren, bei dem das Polyamidpulver (PP)

einen D10-Wert im Bereich von 10 bis 30 μm,
einen D50-Wert im Bereich von 25 bis 70 μm und
einen D90-Wert im Bereich von 50 bis 150 μm

aufweist.

Unter dem "D10-Wert" wird im Rahmen der vorliegenden Erfindung die Partikelgröße verstanden, bei der 10 Vol.-% der Partikel, bezogen auf das Gesamtvolumen der Partikel, kleiner oder gleich dem D10-Wert sind und 90 Vol.-% der Partikel, bezogen auf das Gesamtvolumen der Partikel, größer als der D10-Wert sind. In Analogie dazu wird unter dem "D50-Wert" die Partikelgröße verstanden, bei der 50 Vol.-% der Partikel, bezogen auf das Gesamtvolumen der Partikel, kleiner oder gleich dem D50-Wert sind und 50 Vol.-% der Partikel, bezogen auf das Gesamtvolumen der Partikel, größer als der D50-Wert sind. Entsprechend wird unter dem "D90-Wert" die Partikelgröße verstanden, bei der 90 Vol.-% der Partikel, bezogen auf das Gesamtvolumen der Partikel, kleiner oder gleich dem D90-Wert sind und 10 Vol.-% der Partikel, bezogen auf das Gesamtvolumen der Partikel, größer als der D90-Wert sind.

Zur Ermittlung der Partikelgrößen wird das Polyamidpulver (PP) trocken mittels Druckluft oder in einem Lösungsmittel, wie beispielsweise Wasser oder Ethanol, suspendiert und diese Suspension vermessen. Die Bestimmung des D10-, D50- und D90-Werts erfolgt mittels Laserbeugung unter Verwendung eines Mastersizers 3000 der Firma Malvern. Die Auswertung erfolgt mittels Fraunhofer-Beugung.

Das erfindungsgemäße Polyamidpulver (PP) weist darüber hinaus eine besonders hohe Schüttdichte auf, beispielsweise eine Schüttdichte im Bereich von 0,3 bis 0,7 g/cm$^3$, bevorzugt im Bereich von 0,4 bis 0,65 g/cm$^3$ und insbesondere bevorzugt im Bereich von 0,45 bis 0,6 g/cm$^3$.

Das Polyamidpulver (PP) kann das mindestens eine teilkristalline Polyamid (P) und das mindestens eine Additiv (A) in beliebigen Mengen enthalten.

Üblicherweise enthält das Polyamidpulver (PP) das mindestens eine teilkristalline Polyamid (P) und das mindestens eine Additiv (A) in den Mengen, wie das mindestens eine teilkristalline Polyamid (P) und das mindestens eine Additiv (A) in Schritt a) compoundiert worden sind.

Beispielsweise enthält das Polyamidpulver (PP) im Bereich von 95 bis 99,95 Gew.-% des mindestens einen teilkristallinen Polyamids und im Bereich von 0,05 bis 5 Gew.-% des mindestens einen Additivs (A), bezogen auf das Gesamtgewicht des Polyamidpulvers (PP).

Bevorzugt enthält das Polyamidpulver (PP) im Bereich von 98 bis 99,95 Gew.-% des mindestens einen teilkristallinen Polyamids (P) und im Bereich von 0,05 bis 2 Gew.-% des mindestens einen Additivs (A), jeweils bezogen auf das Gesamtgewicht des Polyamidpulvers (PP).

In einer weiteren Ausführungsform enthält das Polyamidpulver (PP) im Bereich von 60 bis < 95 Gew.-% des mindestens einen teilkristallinen Polyamids (P) und im Bereich von > 5 bis 40 Gew.-% des mindestens einen Additivs (A), jeweils bezogen auf das Gesamtgewicht des Polyamidpulvers (PP).

Bevorzugt enthält das Polyamidpulver (PP) in dieser Ausführungsform im Bereich von 95 bis 99,95 Gew.-% des mindestens einen teilkristallinen Polyamids (P) und im Bereich von 0,05 bis 5 Gew.-% des mindestens einen Additivs (A), jeweils bezogen auf das Gesamtgewicht des Polyamidpulvers (PP).

Am meisten bevorzugt enthält das Polyamidpulver (PP) in dieser Ausführungsform im Bereich von 98 bis 99,95 Gew.-% des mindestens einen teilkristallinen Polyamids (P) und im Bereich von 0,05 bis 2 Gew.-% des mindestens einen Additivs (A), jeweils bezogen auf das Gesamtgewicht des Polyamidpulvers (PP).

Es versteht sich von selbst, dass, wenn in Schritt a) zusätzlich ein Zusatzstoff compoundiert worden ist, dann auch das in Schritt f) erhaltene Polyamidpulver (PP) diesen Zusatzstoff enthält. Üblicherweise enthält das Polyamidpulver (PP) diesen Zusatzstoff dann in den Mengen, wie er in Schritt a) compoundiert worden ist.

Das Polyamidpulver (PP) kann darüber hinaus noch Reste des Lösungsmittels (LM) enthalten.

Unter "Resten" des Lösungsmittels (LM) werden beispielsweise im Bereich von 0,01 bis 5 Gew.-% des Lösungsmittels (LM), bevorzugt im Bereich von 0,1 bis 3 Gew.-% und insbesondere bevorzugt im Bereich von 0,1 bis 1 Gew.-% des Lösungsmittels (LM) verstanden, jeweils bezogen auf das Gesamtgewicht des Polyamidpulvers (PP).

Wenn das Polyamidpulver (PP) im Bereich von > 5 bis 50 Gew.-% des mindestens einen Additivs (A), bevorzugt im Bereich von 10 bis 40 Gew.-% des mindestens einen Additivs (A) und insbesondere bevorzugt im Bereich von 10 bis 30 Gew.-% des mindestens einen Additivs (A) enthält, jeweils bezogen auf das Gesamtgewicht des Polyamidpulvers (PP), dann ist das Polyamidpulver (PP) ein sogenannter Masterbatch. Ein solcher Masterbatch wird üblicherweise vor der Verwendung, beispielsweise in einem selektiven Lasersinterprozess und/oder zur Herstellung von Formkörpern mit weiterem teilkristallinen Polyamid (P) verdünnt. Derartige Verfahren sind dem Fachmann bekannt.

In dem Polyamidpulver (PP) liegt das mindestens eine Additiv (A) üblicherweise dispergiert in dem mindestens einen teilkristallinen Polyamid (P) vor. Das mindestens eine Additiv (A) bildet dann die disperse Phase (innere Phase), das mindestens eine teilkristalline Polyamid (P) bildet das Dispersionsmedium (äußere Phase).

Das Polyamidpulver (PP) weist üblicherweise eine Schmelztemperatur ($T_{M(PP)}$) im Bereich von 180 bis 270° C auf. Bevorzugt liegt die Schmelztemperatur ($T_{M(PP)}$) des Polyamidpulvers (PP) im Bereich von 185 bis 260° C und insbesondere bevorzugt im Bereich von 190 bis 245° C.

Gegenstand der vorliegenden Erfindung ist daher auch ein Verfahren, bei dem das Polyamidpulver (PP) eine Schmelztemperatur ($T_{M(PP)}$) im Bereich von 180 bis 270° C aufweist.

Die Schmelztemperatur ($T_{M(PP)}$) des Polyamidpulvers (PP) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K) gemessen. Dabei wird ein DSC-Diagramm, wie es in Figur 1 beispielhaft gezeigt ist, erhalten. Unter der Schmelztemperatur ($T_{M(PP)}$) wird dann die Temperatur verstanden, bei der der Aufschmelzpeak des Heizlaufs (H) des DSC-Diagramms ein Maximum aufweist. Die Schmelztemperatur ($T_{M(PP)}$) ist also von der weiter unten beschriebenen Onset-Temperatur des Aufschmelzens ($T_M^{onset}$) verschieden. Üblicherweise liegt die Schmelztemperatur ($T_{M(PP)}$) oberhalb der Onset-Temperatur des Aufschmelzens ($T_M^{onset}$).

Das Polyamidpulver (PP) weist außerdem üblicherweise eine Kristallisationstemperatur ($T_{C(PP)}$) im Bereich von 120 bis 250 °C auf. Bevorzugt liegt die Kristallisationstemperatur ($T_{C(PP)}$) des Polyamidpulvers (PP) im Bereich von 130 bis 240 °C und insbesondere bevorzugt im Bereich von 140 bis 235 °C.

Gegenstand der vorliegenden Erfindung ist daher auch ein Verfahren, bei dem das Polyamidpulver (PP) eine Kristallisationstemperatur ($T_{C(PP)}$) im Bereich von 120 bis 250 °C aufweist.

Die Kristallisationstemperatur ($T_{C(PP)}$) wird im Rahmen der vorliegenden Erfindung ebenfalls mittels dynamischer Differenzkalorimetrie (DDK; Differential Scanning Calorimetry, DSC) bestimmt. Dabei werden, wie vorstehend beschrieben, üblicherweise ein Heizlauf (H) und ein Kühllauf (K) gemessen. Es wird ein DSC-Diagramm, wie es in Figur 1 beispielhaft gezeigt ist, erhalten. Die Kristallisationstemperatur ($T_{C(PP)}$) ist dann die Temperatur am Minimum des Kristallisationspeaks der DSC-Kurve. Die Kristallisationstemperatur ($T_{C(PP)}$) ist also von der weiter unten beschriebenen Onset-Temperatur der Kristallisation ($T_C^{onset}$).

Das Polyamidpulver (PP) weist außerdem üblicherweise eine Glasübergangstemperatur ($T_{G(P)}$) auf. Die Glasübergangstemperatur ($T_{G(PP)}$) des Polyamidpulvers (PP) liegt üblicherweise im Bereich von 0 bis 110 ° C, bevorzugt im Bereich von 40 bis 105° C und insbesondere bevorzugt im Bereich von 40 bis 105° C.

Die Glasübergangstemperatur ($T_{G(PP)}$) des Polyamidpulvers (PP) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe des Polyamidpulvers (PP) (Einwaage ca. 8,5 g) gemessen. Die Heizrate beim ersten Heizlauf (H1) und beim zweiten Heizlauf (H2) beträgt 20 K/min, die Kühlrate beim Kühllauf (K) beträgt ebenfalls 20 K/min. Im Bereich des Glasübergangs des Polyamidpulvers (PP) wird im zweiten Heizlauf (H2) des DSC-Diagramms eine Stufe erhalten. Die Glasübergangstemperatur ($T_{G(PP)}$) des Polyamidpulvers (PP) entspricht der Temperatur bei halber Stufenhöhe im DSC-Diagramm. Dieses Verfahren zur Bestimmung der Glasübergangstemperatur ist dem Fachmann bekannt.

Das Polyamidpulver (PP) weist außerdem üblicherweise ein Sinterfenster ($W_{PP}$) auf. Das Sinterfenster ($W_{PP}$) ist, wie nachfolgend näher ausgeführt, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend beschrieben bestimmt.

Das Sinterfenster ($W_{PP}$) des Polyamidpulvers (PP) liegt vorzugsweise im Bereich von 15 bis 40 K (Kelvin), besonders bevorzugt im Bereich von 20 bis 35 K und insbesondere bevorzugt im Bereich von 20 bis 30 K.

Gegenstand der vorliegenden Erfindung ist daher auch ein Verfahren, bei dem das Polyamidpulver ein Sinterfenster ($W_{PP}$) aufweist, wobei das Sinterfenster ($W_{PP}$) die Differenz zwischen der Onset-Temperatur des Aufschmelzens ($T_M^{onset}$) und der Onset-Temperatur der Kristallisation ($T_C^{onset}$) ist und wobei das Sinterfenster ($W_{PP}$) im Bereich von 15 bis 40 K liegt.

Gegenstand der vorliegenden Erfindung ist daher auch ein Polyamidpulver (PP), erhältlich nach dem erfindungsgemäßen Verfahren.

Aufgrund der vorstehend beschriebenen Eigenschaften des Polyamidpulvers (PP) eignet sich das erfindungsgemäße Polyamidpulver (PP) besonders gut als Sinterpulver (SP).

Gegenstand der vorliegenden Erfindung ist daher auch die Verwendung eines erfindungsgemäßen Polyamidpulvers (PP) als Sinterpulver (SP).

Gegenstand der vorliegenden Erfindung ist weiterhin ein Verfahren zur Herstellung eines Formkörpers durch selektives Lasersintern eines erfindungsgemäßen Polyamidpulvers (PP).

Selektives Lasersintern

Das Verfahren des selektiven Lasersinterns ist dem Fachmann an sich beispielsweise aus der US 6,136,948 und der WO 96/06881 bekannt.

Beim Lasersintern wird eine erste Schicht eines sinterbaren Pulvers in einem Pulverbett angeordnet und mit einem Laserstrahl lokal und kurzzeitig belichtet. Dabei wird nur der Teil des sinterbaren Pulvers, der vom Laserstrahl belichtet worden ist, selektiv aufgeschmolzen (selektives Lasersintern). Das aufgeschmolzene sinterbare Pulver fließt ineinander und bildet so eine homogene Schmelze in dem belichteten Bereich. Im Anschluss kühlt der Bereich wieder ab und die homogene Schmelze erstarrt wieder. Dann wird das Pulverbett um die Schichtdicke der ersten Schicht abgesenkt, eine zweite Schicht des sinterbaren Pulvers aufgebracht, mit dem Laser selektiv belichtet und aufgeschmolzen. Dadurch verbindet sich zum einen die obere zweite Schicht des sinterbaren Pulvers mit der unteren ersten Schicht, außerdem verbinden sich die Partikel des sinterbaren Pulvers innerhalb der zweiten Schicht durch das Aufschmelzen miteinander. Indem das Absenken des Pulverbetts, das Aufbringen des sinterbaren Pulvers und das Aufschmelzen des sinterbaren Pulvers wiederholt werden, können dreidimensionale Formkörper hergestellt werden. Durch die selektive Belichtung bestimmter Stellen mit dem Laserstrahl ist es möglich, Formkörper herzustellen, die beispielsweise auch Hohlräume aufweisen. Ein zusätzliches Stützmaterial ist nicht notwendig, da das nicht aufgeschmolzene sinterbare Pulver selbst als Stützmaterial fungiert.

Als sinterbares Pulver beim selektiven Lasersintern eignen sich alle dem Fachmann bekannten Pulver, die durch Belichtung mit einem Laser aufgeschmolzen werden können. Erfindungsgemäß wird als sinterbares Pulver beim selektiven Lasersintern das Polyamidpulver (PP), auch als Sinterpulver (SP) bezeichnet, eingesetzt.

Im Rahmen der vorliegenden Erfindung können daher die Begriffe "sinterbares Pulver", "Polyamidpulver (PP)" und "Sinterpulver (SP)" synonym gebraucht werden, sie besitzen dann die gleiche Bedeutung.

Geeignete Laser für das selektive Lasersintern sind dem Fachmann bekannt und beispielsweise Faserlaser, Nd:YAG-Laser (Neodym-dotierter Yttrium-Aluminium-Granat-Laser) und Kohlendioxidlaser.

Von besonderer Bedeutung bei dem selektiven Lasersinterverfahren ist der Schmelzbereich des sinterbaren Pulvers, das sogenannte "Sinterfenster (W)". Ist das sinterbare Pulver das erfindungsgemäße Polyamidpulver (PPP), so wird im Rahmen der vorliegenden Erfindung das Sinterfenster (W) als "Sinterfenster ($W_{PP}$)" des Polyamidpulvers (PP) bezeichnet.

Das Sinterfenster (W) eines sinterbaren Pulvers kann beispielsweise durch dynamische Differenzkalorimetrie (DDK; differential scanning calorimetry, DSC) bestimmt werden.

Bei der dynamischen Differenzkalorimetrie werden die Temperatur einer Probe, im vorliegenden Fall also einer Probe des sinterbaren Pulvers, und die Temperatur einer Referenz linear mit der Zeit geändert. Dazu werden der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge $Q_R$.

Geht die Probe eine endotherme Phasenumwandlung ein, muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC-Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs (H) üblicherweise mit einer Heizrate von 20 K/min. Das Abkühlen während des Kühllaufs (K) erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset-Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset} .$$

Im Rahmen der vorliegenden Erfindung haben die Begriffe "Sinterfenster (W)", "Größe des Sinterfensters (W)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Die vorliegende Erfindung wird durch die nachfolgenden Beispiele näher erläutert, ohne sie jedoch hierauf zu beschränken.

*Herstellung der extrudierten Mischungen (eM)*

In einem Extruder wurden Polyamid 6 und Irganox 1098 (N,N'-1,6-hexanediylbis[3,5-bis(1,1-dimethylethyl)-4-hydroxy) compoundiert, um eine extrudierte Mischung (eM1) zu erhalten, die Polyamid 6 mit einem Gehalt von 0,4 Gew.-% Irganox 1098, bezogen auf das Gesamtgewicht der extrudierten Mischung (eM1), enthält.

Darüber hinaus wurde eine zweite extrudierte Mischung (eM2) hergestellt, die Polyamid 6 mit einem Gehalt von 0,3 Gew.-% Spezialschwarz (Ruß) enthält, bezogen auf das Gesamtgewicht der zweiten extrudierten Mischung (eM2).

*Herstellung der Polyamidpulver (PP)*

Die extrudierten Mischungen (eM1) und (eM2) wurden nachfolgend in den Lösungsmitteln (LM) aufgelöst und anschließend aus diesen gefällt, um die Polyamidpulver (PP) zu erhalten. In den erfindungsgemäßen Beispielen E1 und E2 wurde die erste extrudierte Mischung (eM1) und die zweite extrudierte Mischung (eM2) jeweils in einem Gemisch aus Caprolactam in Wasser (Caprolactamgehalt 42 Gew.-%) aufgelöst und nachfolgend aus diesen gefällt. In den Vergleichsbeispielen V1 und V2 wurden die extrudierten Mischungen (eM1) und (eM2) jeweils in Ethanol gelöst und nachfolgend daraus gefällt. Die Ergebnisse sind in der nachfolgenden Tabelle 1 wiedergegeben:

Tabelle 1

| Beispiel Nr. | Durchführung | Schüttdichte [g/mol] | Feinanteil < 10 $\mu$m | Partikelform |
|---|---|---|---|---|
| E1 | 25 g eM1 in 250g 42,5% Caprolactam in Wasser | 0,43 | 0% | rund; fein-porös; sehr gelichmäßig |
| V1 | 25 g eM2 in 250 g EtOH | 0,18 | 7% | kantig; ungleichmäßig; sehr grobzellig porös |
| E2 | 25 g eM2 in 250g 42,5% Caprolactam in Wasser | 0,42 | 2% | rund; fein-porös; sehr gelichmäßig |
| V2 | 25 g eM2 in 250 g EtOH | 0,14 | 8% | kantig; ungleichmäßig; sehr grobzellig porös |

Die erfindungsgemäßen Beispiele E1 und E2 zeigen, dass mit dem erfindungsgemäßen Verfahren Polyamidpartikel (PP) erhalten werden, die eine deutlich höhere Schüttdichte aufweisen. Darüber hinaus wird durch das erfindungsgemäße Verfahren zur Herstellung von Polyamidpulvern (PP) der Gehalt an Feinanteil deutlich reduziert. Ferner weisen die erfindungsgemäß hergestellten Polyamidpartikel eine gleichmäßigere Partikelform auf.

**Patentansprüche**

1. Verfahren zur Herstellung eines Polyamidpulvers (PP), das mindestens ein teilkristallines Polyamid (P) und mindestens ein Additiv (A) ausgewählt aus der Gruppe bestehend aus anorganischen Pigmenten und Stabilisatoren enthält, umfassend die Schritte

   a) Compoundieren des mindestens einen teilkristallinen Polyamids (P) und des mindestens einen Additivs (A) in einem Extruder unter Erhalt einer compoundierten Mischung (cM), die das mindestens eine teilkristalline Polyamid (P) und das mindestens eine Additiv (A) enthält,
   b) Extrusion der in Schritt a) erhaltenen compoundierten Mischung (cM) aus dem Extruder unter Erhalt einer extrudierten Mischung (eM), die das mindestens eine teilkristalline Polyamid (P) und das mindestens eine Additiv (A) enthält,

c) Einbringen der in Schritt b) erhaltenen extrudierten Mischung (eM) in ein Lösungsmittel (LM) unter Erhalt einer ersten Suspension (S1), die die extrudierte Mischung (eM) und das Lösungsmittel (LM) enthält, wobei das Lösungsmittel (LM) Lactam und Wasser enthält.

d) Erwärmen der in Schritt c) erhaltenen ersten Suspension (S1) auf eine erste Temperatur (T1) wobei sich das in der extrudierten Mischung (eM) enthaltene mindestens eine teilkristalline Polyamid (P) in dem Lösungsmittel (LM) löst unter Erhalt eines Gemischs (G), das das mindestens eine teilkristalline Polyamid (P) gelöst in dem Lösungsmittel (LM) und das mindestens eine Additiv (A) enthält,

e) Abkühlen des in Schritt d) erhaltenen Gemischs (G) auf eine zweite Temperatur (T2), wobei das mindestens eine teilkristalline Polyamid (P) kristallisiert unter Erhalt einer zweiten Suspension (S2), die das Polyamidpulver (PP) suspendiert in dem Lösungsmittel (LM) enthält,

f) Abtrennen des Polyamidpulvers (PP) aus der in Schritt e) erhaltenen zweiten Suspension (S2).

2. Verfahren gemäß Anspruch 1, **dadurch gekennzeichnet, dass** die in Schritt c) erhaltene erste Suspension (S1) in Schritt d) auf eine erste Temperatur (T1), die im Bereich von 140 bis 200 °C liegt, erwärmt wird.

3. Verfahren gemäß Anspruch 1 oder 2, **dadurch gekennzeichnet, dass** das in Schritt d) erhaltene Gemisch (G) in Schritt e) auf eine zweite Temperatur (T2), die im Bereich von 100 bis 140 °C liegt, abgekühlt wird.

4. Verfahren gemäß einem der Ansprüche 1 bis 3, **dadurch gekennzeichnet, dass** die in Schritt c) erhaltene erste Suspension (S1) im Bereich von 1 bis 25 Gew.-% der extrudierten Mischung (eM) und im Bereich von 75 bis 99 Gew.-% des Lösungsmittels (LM) enthält, bezogen auf das Gesamtgewicht der ersten Suspension (S1).

5. Verfahren gemäß einem der Ansprüche 1 bis 4, **dadurch gekennzeichnet, dass** die in Schritt b) erhaltene extrudierte Mischung (eM) im Bereich von 0,05 bis 5 Gew.-% des mindestens einen Additivs (A) enthält, bezogen auf das Gesamtgewicht der extrudierten Mischung (eM).

6. Verfahren gemäß einem der Ansprüche 1 bis 4, **dadurch gekennzeichnet, dass** die in Schritt b) erhaltene extrudierte Mischung (eM) im Bereich von > 5 bis 50 Gew.-% des mindestens einen Additivs (A) enthält, bezogen auf das Gesamtgewicht der extrudierten Mischung (eM).

7. Verfahren gemäß einem der Ansprüche 1 bis 6, **dadurch gekennzeichnet, dass** das mindestens eine teilkristalline Polyamid (P) ausgewählt ist aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM 12, PA 6I/6T/PACM und Copolyamiden aus zwei oder mehreren der vorstehend genannten Polyamide.

8. Verfahren gemäß einem der Ansprüche 1 bis 7, **dadurch gekennzeichnet, dass** die Stabilisatoren ausgewählt sind aus der Gruppe bestehend aus sterisch gehinderten Phenolen, sterisch gehinderten Aminen, Phosphiten und Kupferstabilisatoren.

9. Verfahren gemäß einem der Ansprüche 1 bis 8, **dadurch gekennzeichnet, dass** zumindest das Gemisch (G) während Schritt e) mit einem Rührer gerührt wird, wobei der spezifische Leistungseintrag des Rührers in das Gemisch (G) im Bereich von 100 bis 500 W/m$^3$ liegt.

10. Verfahren gemäß einem der Ansprüche 1 bis 9, **dadurch gekennzeichnet, dass** die compoundierte Mischung (cM) bei der Extrusion während Schritt b) granuliert wird auf eine Partikelgröße im Bereich von 0,5 bis 6 mm.

11. Verfahren gemäß einem der Ansprüche 1 bis 10, **dadurch gekennzeichnet, dass** anorganische Pigmente ausgewählt sind aus der Gruppe bestehend aus Ruß und Metalloxiden.

12. Polyamidpulver (PP) erhältlich nach einem Verfahren gemäß einem der Ansprüche 1 bis 11.

13. Verwendung eines Polyamidpulvers (PP) gemäß Anspruch 12 als Sinterpulver (SP).

14. Verfahren zur Herstellung eines Formkörpers durch selektives Lasersintern eines Polyamidpulvers (PP) gemäß Anspruch 12.

**Claims**

1. A process for producing a polyamide powder (PP) comprising at least one semicrystalline polyamide (P) and at least one additive (A) selected from the group consisting of inorganic pigments and stabilizers, comprising the steps of

   a) compounding the at least one semicrystalline polyamide (P) and the at least one additive (A) in an extruder to obtain a compounded mixture (cM) comprising the at least one semicrystalline polyamide (P) and the at least one additive (A),

   b) extruding the compounded mixture (cM) obtained in step a) from the extruder to obtain an extruded mixture (eM) comprising the at least one semicrystalline polyamide (P) and the at least one additive (A),

   c) introducing the extruded mixture (eM) obtained in step b) into a solvent (SV) to obtain a first suspension (S1) comprising the extruded mixture (eM) and the solvent (SV), wherein the solvent (SV) comprises lactam and water,

   d) heating the first suspension (S1) obtained in step c) to a first temperature (T1) wherein the at least one semicrystalline polyamide (P) present in the extruded mixture (eM) dissolves in the solvent (SV) to obtain a mixture (G) comprising the at least one semicrystalline polyamide (P) dissolved in the solvent (SV) and the at least one additive (A),

   e) cooling the mixture (G) obtained in step d) to a second temperature (T2) wherein the at least one semicrystalline polyamide (P) crystallizes to obtain a second suspension (S2) comprising the polyamide powder (PP) suspended in the solvent (SV),

   f) separating the polyamide powder (PP) from the second suspension (S2) obtained in step e).

2. The process according to claim 1, wherein in step d) the first suspension (S1) obtained in step c) is heated to a first temperature (T1) in the range from 140°C to 200°C.

3. The process according to claim 1 or 2, wherein in step e) the mixture (G) obtained in step d) is cooled to a second temperature (T2) in the range from 100°C to 140°C.

4. The process according to any of claims 1 to 3, wherein the first suspension (S1) obtained in step c) comprises in the range from 1% to 25% by weight of the extruded mixture (eM) and in the range from 75% to 99% by weight of the solvent (SV) based on the total weight of the first suspension (S1).

5. The process according to any of claims 1 to 4, wherein the extruded mixture (eM) obtained in step b) comprises in the range from 0.05% to 5% by weight of the at least one additive (A) based on the total weight of the extruded mixture (eM).

6. The process according to any of claims 1 to 4, wherein the extruded mixture (eM) obtained in step b) comprises in the range from > 5% to 50% by weight of the at least one additive (A) based on the total weight of the extruded mixture (eM).

7. The process according to any of claims 1 to 6, wherein the at least one semicrystalline polyamide (P) is selected from the group consisting of PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM 12, PA 6I/6T/PACM and copolyamides of two or more of the abovementioned polyamides.

8. The process according to any of claims 1 to 7, wherein the stabilizers are selected from the group consisting of sterically hindered phenols, sterically hindered amines, phosphites and copper stabilizers.

9. The process according to any of claims 1 to 8, wherein at least the mixture (G) is stirred with a stirrer during step e), wherein the specific power input of the stirrer into the mixture (G) is in the range from 100 to 500 W/m$^3$.

10. The process according to any of claims 1 to 9, wherein in the extrusion during step b) the compounded mixture (cM) is pelletized to a particle size in the range from 0.5 to 6 mm

11. The process according to any of claims 1 to 10, wherein inorganic pigments are selected from the group consisting of carbon black and metal oxides.

12. A polyamide powder (PP) obtainable by a process according to any of claims 1 to 11.

**13.** The use of a polyamide powder (PP) according to claim 12 as sintering powder (SP).

**14.** A process for producing a shaped body by selective laser sintering of a polyamide powder (PP) according to claim 12.

**Revendications**

**1.** Procédé de fabrication d'une poudre de polyamide (PP), qui contient au moins un polyamide partiellement cristallin (P) et au moins un additif (A) choisi dans le groupe constitué par les pigments inorganiques et les stabilisateurs, comprenant les étapes suivantes :

a) le malaxage dudit au moins un polyamide partiellement cristallin (P) et dudit au moins un additif (A) dans une extrudeuse avec obtention d'un mélange malaxé (cM), qui contient ledit au moins un polyamide partiellement cristallin (P) et ledit au moins un additif (A),
b) l'extrusion du mélange malaxé (cM) obtenu dans l'étape a) à partir de l'extrudeuse avec obtention d'un mélange extrudé (eM), qui contient ledit au moins un polyamide partiellement cristallin (P) et ledit au moins un additif (A),
c) l'introduction du mélange extrudé (eM) obtenu dans l'étape b) dans un solvant (LM) avec obtention d'une première suspension (S1), qui contient le mélange extrudé (eM) et le solvant (LM), le solvant (LM) contenant du lactame et de l'eau,
d) le chauffage de la première suspension (S1) obtenue dans l'étape c) à une première température (T1), ledit au moins un polyamide partiellement cristallin (P) contenu dans le mélange extrudé (eM) se dissolvant dans le solvant (LM) avec obtention d'un mélange (G), qui contient ledit au moins un polyamide partiellement cristallin (P) dissous dans le solvant (LM) et ledit au moins un additif (A),
e) le refroidissement du mélange (G) obtenu dans l'étape d) à une deuxième température (T2), ledit au moins un polyamide partiellement cristallin (P) cristallisant avec obtention d'une deuxième suspension (S2), qui contient la poudre de polyamide (PP) suspendue dans le solvant (LM),
f) la séparation de la poudre de polyamide (PP) de la deuxième suspension (S2) obtenue dans l'étape e).

**2.** Procédé selon la revendication 1, **caractérisé en ce que** la première suspension (S1) obtenue dans l'étape c) est portée dans l'étape d) à une première température (T1), qui se situe dans la plage allant de 140 à 200 °C.

**3.** Procédé selon la revendication 1 ou 2, **caractérisé en ce que** le mélange (G) obtenu dans l'étape d) est refroidi dans l'étape e) à une deuxième température (T2), qui se situe dans la plage allant de 100 à 140 °C.

**4.** Procédé selon l'une quelconque des revendications 1 à 3, **caractérisé en ce que** la première suspension (S1) obtenue dans l'étape c) contient dans la plage allant de 1 à 25 % en poids du mélange extrudé (eM) et dans la plage allant de 75 à 99 % en poids du solvant (LM), par rapport au poids total de la première suspension (S1).

**5.** Procédé selon l'une quelconque des revendications 1 à 4, **caractérisé en ce que** le mélange extrudé (eM) obtenu dans l'étape b) contient dans la plage allant de 0,05 à 5 % en poids dudit au moins un additif (A), par rapport au poids total du mélange extrudé (eM).

**6.** Procédé selon l'une quelconque des revendications 1 à 4, **caractérisé en ce que** le mélange extrudé (eM) obtenu dans l'étape b) contient dans la plage allant de > 5 à 50 % en poids dudit au moins un additif (A), par rapport au poids total du mélange extrudé (eM).

**7.** Procédé selon l'une quelconque des revendications 1 à 6, **caractérisé en ce que** ledit au moins un polyamide partiellement cristallin (P) est choisi dans le groupe constitué par PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM 12, PA 6I/6T/PACM et les copolyamides de deux ou davantage des polyamides susmentionnés.

**8.** Procédé selon l'une quelconque des revendications 1 à 7, **caractérisé en ce que** les stabilisateurs sont choisis dans le groupe constitué par les phénols à encombrement stérique, les amines à encombrement stérique, les phosphites et les stabilisateurs cuivre.

**9.** Procédé selon l'une quelconque des revendications 1 à 8, **caractérisé en ce qu'**au moins le mélange (G) est agité avec un agitateur pendant l'étape e), l'apport de puissance spécifique de l'agitateur dans le mélange (G) se situant dans la plage allant de 100 à 500 W/m$^3$.

10. Procédé selon l'une quelconque des revendications 1 à 9, **caractérisé en ce que** le mélange malaxé (cM) est granulé lors de l'extrusion pendant l'étape b) à une taille de particule dans la plage allant de 0,5 à 6 mm.

11. Procédé selon l'une quelconque des revendications 1 à 10, **caractérisé en ce que** les pigments inorganiques sont choisis dans le groupe constitué par le noir de carbone et les oxydes métalliques.

12. Poudre de polyamide (PP) pouvant être obtenue par un procédé selon l'une quelconque des revendications 1 à 11.

13. Utilisation d'une poudre de polyamide (PP) selon la revendication 12 en tant que poudre de frittage (SP) .

14. Procédé de fabrication d'un corps moulé par frittage laser sélectif d'une poudre de polyamide (PP) selon la revendication 12.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136948 A
- WO 9606881 A
- EP 1505111 A1


**In der Beschreibung aufgeführte Nicht-Patentliteratur**

- *CHEMICAL ABSTRACTS,* 136504-96-6
- *CHEMICAL ABSTRACTS,* 192268- 64-7
- *CHEMICAL ABSTRACTS,* 106917-31-1
- **MARKO ZLOKARNIK.** Quelle: Ullmanns Encyclopedia of Industrial Chemistry. Wiley-VCH Verlag GmbH & Co. KGaA, 2012